# EUROPEAN PATENT APPLICATION

(11) **EP 4 808 253 A1**
(43) Date of publication of application: **16.09.2026**
(21) Application number: 24913401.6
(22) Date of filing: 26.12.2024
(51) Int. Cl.: H04W 74/04, H04W 74/00, H04W 74/0816, H04L 5/00, H04W 72/0446, H04W 84/12, H04W 72/50

(54) **TXOP RETURN IN MULTI-AP COOPERATION IN WIRELESS LAN SYSTEM**

(30) Priority: 27.12.2023 KR 20230193090; 27.02.2024 KR 20240028289; 20.03.2024 KR 20240038722; 15.04.2024 KR 20240050235; 07.05.2024 KR 20240060142; 08.07.2024 KR 20240089860
(71) Applicant: LG Electronics Inc., Yeongdeungpo-gu Seoul 07336 (KR)
(72) Inventor: KIM, Geonhwan, Seoul 06772 (KR); CHOI, Jinsoo, Seoul 06772 (KR); JANG, Insun, Seoul 06772 (KR); BAEK, Sunhee, Seoul 06772 (KR); YOON, Yelin, Seoul 06772 (KR); CHA, Dongju, Seoul 06772 (KR)
(74) Representative: Frenkel, Matthias Alexander
(86) International application number: PCT/KR2024/021131
(87) International publication number: WO 2025/143794

(57) **Abstract**

The present disclosure relates to transmission opportunity (TXOP) return in multi-AP cooperation in a wireless LAN system. According to embodiments of the present disclosure, a method performed by a first AP in a wireless LAN system comprises the steps of: performing a negotiation procedure for multi-AP cooperation with a second AP; receiving, from the second AP, a transmission opportunity (TXOP) sharing frame including information about an allocation interval within a TXOP interval; performing, during the allocation interval, frame exchange with a station (STA) associated with the first AP; and when the frame exchange is completed, transmitting, to the second AP, a TXOP return frame including a TXOP return notification.

## Description

### Technical field

The present disclosure is related to transmission opportunity (TXOP) return in multi-AP coordination in a wireless local area network (WLAN) system.

### Background Art

Next-generation Wi-Fi (e.g., IEEE 802.11be and/or later) aims to support ultra-high reliability in signaling to STAs, and various technologies are being considered to support high throughput, low latency, and extended range. For example, a STA that is shared a TXOP may notify a TXOP return to the AP that shared the TXOP after performing a frame exchange during an allocated time. Such a TXOP return may also be required in multi-AP coordination.

### Disclosure of Invention

### Technical Problem

An aspect of the present disclosure is to provide method and apparatus for TXOP return in multi-AP coordination in a WLAN system.

### Solution to Problem

According to an embodiment of the present disclosure, a method performed by a first AP in a wireless LAN system comprises: performing a negotiation procedure for multi-AP coordination with a second AP; receiving, from the second AP, a transmission opportunity (TXOP) sharing frame comprising information for an allocation duration within a TXOP duration; performing a frame exchange with a station (STA) associated with the first AP in the allocation duration; and upon completion of the frame exchange, transmitting, to the second AP, a TXOP return frame comprising a TXOP return notification.

According to an embodiment of the present disclosure, a method performed by a second AP in a wireless LAN system comprises: performing a negotiation procedure for multi-AP coordination with a first AP; transmitting, to the first AP, a TXOP sharing frame comprising information for an allocation duration within a transmission opportunity (TXOP) duration; upon completion of a frame exchange by the first AP in the allocation duration, receiving, from the first AP, a TXOP return frame comprising a TXOP return notification; and performing a frame exchange with a station (STA) associated with the second AP in a remaining TXOP duration after receiving the TXOP return notification within the TXOP duration.

In various embodiments, apparatuses implementing the above methods are provided.

### Advantageous Effect

The present disclosure may have various advantageous effects.

For example, according to embodiments of the present disclosure, the SAP may transmit, to the DAP, indicator information indicating whether a return for the shared TXOP is required, and through this, an unnecessary TXOP return procedure can be prevented from being performed. In other words, through the TXOP return method of the present disclosure, the DAP may identify whether a TXOP return is required based on a TXOP return request of the SAP, and through this, a utilization rate of a medium can be increased and a TXOP return procedure to the SAP can be successfully performed. Alternatively, a TXOP return procedure may be performed according to a determination and/or implementation of the DAP without a separate indication from the SAP.

In addition, in the present disclosure, by setting a duration field of a frame transmitted in the TXOP allocation duration to a value corresponding to an individual frame exchange time, a hidden node problem that may occur upon a TXOP return can be solved.

In addition, in the present disclosure, a CCA method and apparatus for the SAP to successfully use a remaining TXOP duration after a TXOP return are provided. According to the CCA method provided in the present disclosure, a collision that may occur during a frame exchange after a TXOP return can be prevented, and it can be guaranteed that the SAP can fully use its own BSS operating channel width.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### Brief Description of Drawings

FIG. 1 illustrates an example of a transmitting apparatus and/or receiving apparatus of the present disclosure.
FIG. 2 is a conceptual view illustrating the structure of a wireless local area network (WLAN).
FIG. 3 illustrates a general link setup process.
FIG. 4 illustrates an example of a multi-link (ML).
FIG. 5 illustrates a modified example of a transmitting device and/or a receiving device of the present disclosure.
FIG. 6 illustrates an example of a physical protocol data unit or physical layer (PHY) protocol data unit (PPDU) transmitted/received by an STA of the present disclosure.
FIG. 7 illustrates the layout of resource units (RUs) used for a 20 MHz PPDU.
FIG. 8 illustrates the layout of resource units (RUs) used for 40MHz PPDU.
FIG. 9 illustrates the layout of resource units (RUs) used for an 80MHz PPDU.
FIG. 10 illustrates an operation related to UL-MU.
FIG. 11 illustrates an example of channels used/supported/defined within the 2.4 GHz band.
FIG. 12 illustrates an example of channels used/supported/defined within the 5 GHz band.
FIG. 13 illustrates an example of channels used, supported, and defined within the 6 GHz band.
FIG. 14 shows an example of a random backoff procedure.
FIG. 15 illustrates an example of a procedure related to NAV setting.
FIG. 16 illustrates a trigger frame format. The trigger frame format may also be referred to as the structure of a trigger frame.
FIG. 17 illustrates an example of the User Info field format of the MU-RTS TXS TF.
FIG. 18 illustrates an example of operation when the TXOP sharing mode subfield has a value of 2.
FIG. 19 illustrates an example of coordinated time division multiple access (C-TDMA) between coordinating APs.
FIG. 20 shows an example of a method performed by a first AP for a TXOP return in a multi-AP coordination environment according to an embodiment of the present disclosure.
FIG. 21 shows an example of a method performed by a second AP for a TXOP return in a multi-AP coordination environment according to an embodiment of the present disclosure.
FIG. 22 shows an example of a TXOP return procedure using a CF-End frame according to an embodiment of the present disclosure.
FIG. 23 shows an example of a TXOP return procedure using an MU-RTS TXS TF and a CTS frame according to an embodiment of the present disclosure.
FIG. 24 shows an example of a TXOP return procedure using a BAR frame and a BA frame according to an embodiment of the present disclosure.
FIG. 25 shows an example of a TXOP return procedure using a management frame including an A-Control field according to an embodiment of the present disclosure.
FIG. 26 shows an example of a TXOP return procedure using a management frame that is an action frame according to an embodiment of the present disclosure.
FIG. 27 shows an example of a TXOP return procedure using a BSRP TF and a TB PPDU (or non-TB PPDU) according to an embodiment of the present disclosure.
FIG. 28 shows an example of a TXOP return procedure using a multi-STA BA frame according to an embodiment of the present disclosure.
FIG. 29 shows an example of a case of setting a duration field for preventing a hidden node problem upon a TXOP return according to an embodiment of the present disclosure.
FIG. 30 shows a first example of a CCA procedure in which a backoff is not performed after a TXOP return according to an embodiment of the present disclosure.
FIG. 31 shows a second example of a CCA procedure in which a backoff is not performed after a TXOP return according to an embodiment of the present disclosure.
FIG. 32 shows a third example of a CCA procedure in which a backoff is not performed after a TXOP return according to an embodiment of the present disclosure.
FIG. 33 shows a first example of a CCA procedure in which a backoff is performed after a TXOP return according to an embodiment of the present disclosure.
FIG. 34 shows a second example of a CCA procedure in which a backoff is performed after a TXOP return according to an embodiment of the present disclosure.
FIG. 35 shows an example regarding a configuration of a PPDU bandwidth after a TXOP return in Co-TDMA according to an embodiment of the present disclosure.

### Mode for the Invention

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

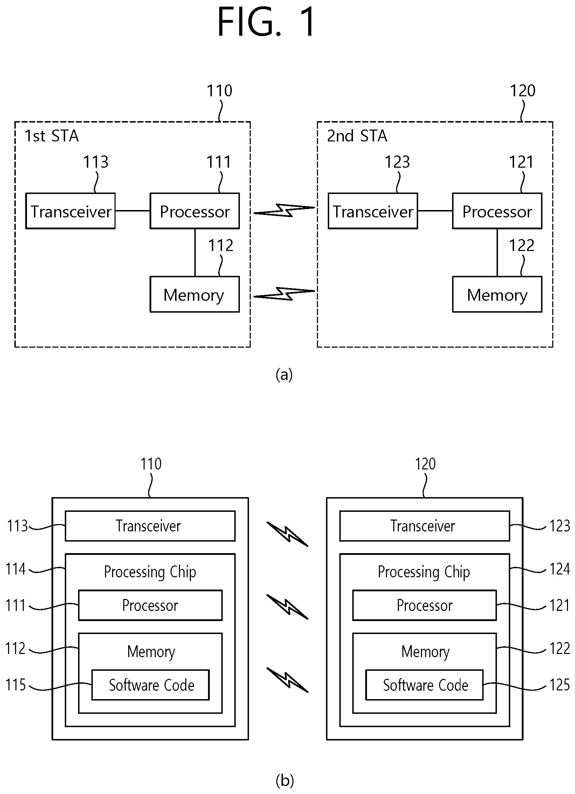

FIG. 1 illustrates an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGON^{®} series of processors made by Qualcomm^{®}, EXYNOS^{®} series of processors made by Samsung^{®}, A series of processors made by Apple^{®}, HELIO^{®} series of processors made by MediaTek^{®}, ATOM^{®} series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

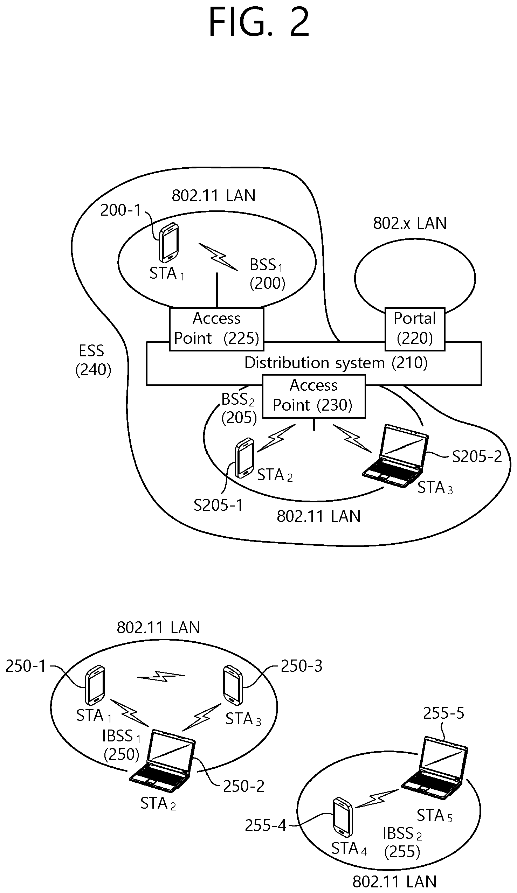

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

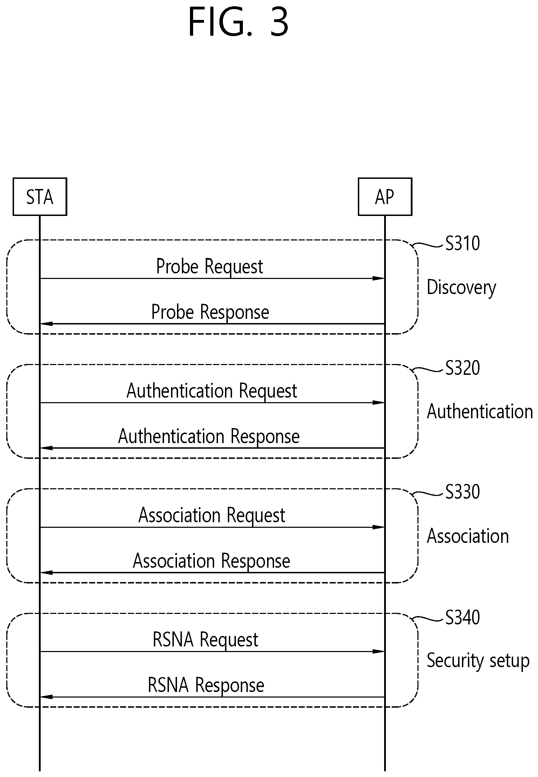

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

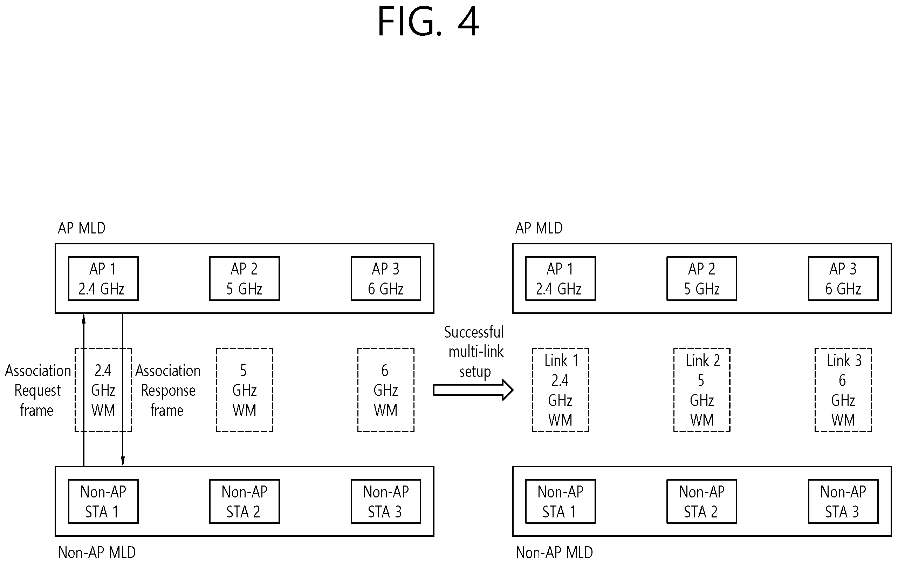

FIG. 4 illustrates an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

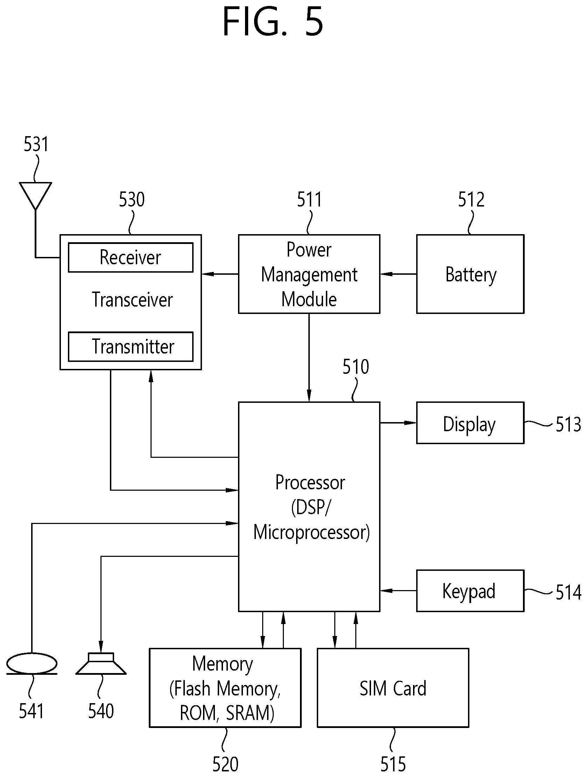

FIG. 5 illustrates a modified example of a transmitting device and/or a receiving device of the present disclosure.

The devices (e.g., AP STA, non-AP STA) shown in FIGS. 1 to 4 can be modified as shown in FIG. 5. The transceiver 530 of FIG. 5 can be identical to the transceiver 113, 123 of FIG. 1. The transceiver 530 of FIG. 5 can include a receiver and a transmitter.

The processor 510 of FIG. 5 can be identical to the processor 111, 121 of FIG. 1. Alternatively, the processor 510 of FIG. 5 can be identical to the processing chip 114, 124 of FIG. 1.

The memory 150 of FIG. 5 may be the same as the memory 112, 122 of FIG. 1. Alternatively, the memory 150 of FIG. 5 may be a separate external memory different from the memory 112, 122 of FIG. 1.

Referring to FIG. 5, the power management module 511 manages power for the processor 510 and/or the transceiver 530. The battery 512 supplies power to the power management module 511. The display 513 outputs the result processed by the processor 510. The keypad 514 receives input to be used by the processor 510. The keypad 514 may be displayed on the display 513. The SIM card 515 may be an integrated circuit used to securely store an international mobile subscriber identity (IMSI) and its associated keys, which are used to identify and authenticate subscribers in mobile devices such as mobile phones and computers.

Referring to FIG. 5, the speaker (540) may output sound-related results processed by the processor 510. The microphone (541) may receive sound-related input to be used by the processor 510.

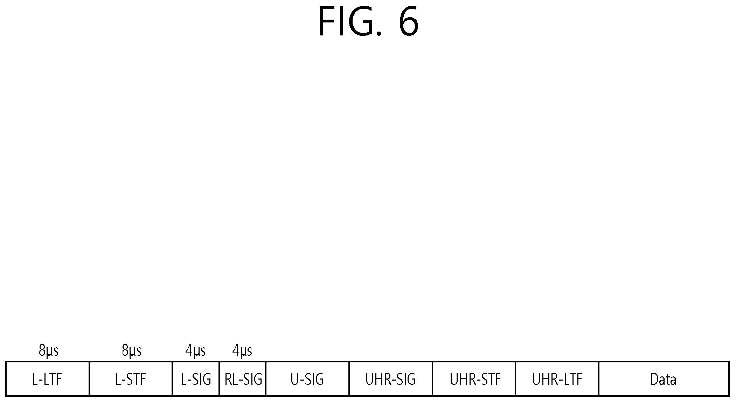

FIG. 6 illustrates an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 6. The PPDU described in the present disclosure can have, for example, a structure of FIG. 6. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

The PPDU of FIG. 6 can be related to various PPDU types used in a UHR system. For example, the example of FIG. 6 can be used for at least one of single-user (SU) mode/type/transmission, multi-user (MU) mode/type/transmission, and null-data packet (NDP) mode/type/transmission related to channel sounding. For example, if the example of FIG. 6 is related to NDP, the data field illustrated can be omitted. If the PPDU of FIG. 6 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 6.

In FIG. 6, L-STF or UHR-LTF may be called a preamble or a physical preamble, and may be generated/transmitted/received/acquired/decoded in the physical layer (included in the transmitting/receiving STA).

Each block illustrated in FIG. 6 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 6.

A subcarrier spacing of the L-STF, L-LTF, L-SIG, RL-SIG, U-SIG, and UHR-SIG fields of FIG. 6 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 6, the L-LTF and the L-STF may be the same as those in the conventional fields (for example, non-HT LTF and non-HT STF defined in conventional WLAN standards).

The L-SIG field of FIG. 6 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (CBF), spatial reuse (SR), type related to coordinated OFDMA (C-OFDMA), type related to coordinated TDMA (CTDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 6. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 6 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 6 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

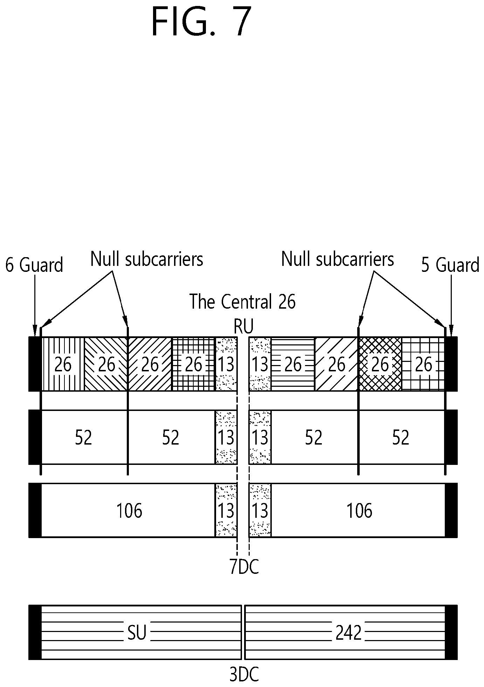

FIG. 7 illustrates the layout of resource units (RUs) used for a 20 MHz PPDU. That is, the UHR-LTF, UHR-STF, and/or data fields included in the 20 MHz PPDU can be transmitted/received through at least one of the various RUs defined in FIG. 7.

As illustrated in the uppermost part of FIG. 7, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 7 may be used not only for a multiple users (MUs) but also for a single user (SU), in which case one 242-unit may be used and three DC tones may be inserted as illustrated in the lowermost part of FIG. 7.

Although FIG. 7 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In the present disclosure, N-RU may be represented as N-tone RU, etc. For example, 26-RU may be represented as 26-tone RU.

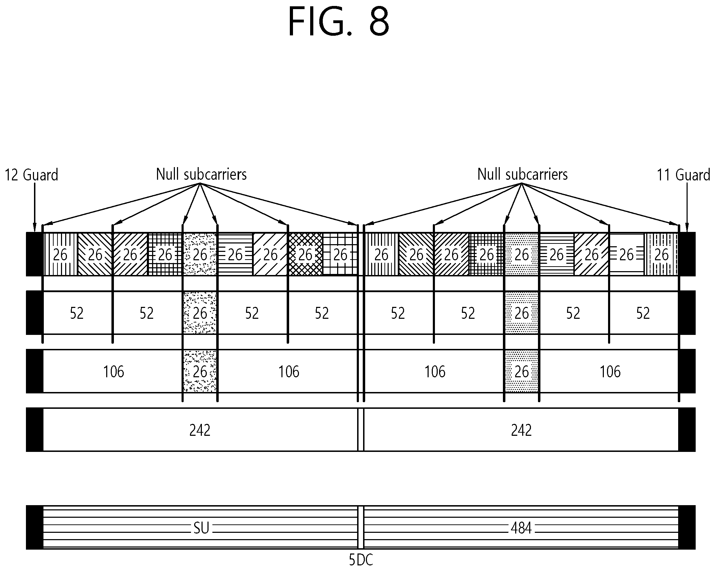

FIG. 8 illustrates the layout of resource units (RUs) used for 40MHz PPDU.

Similarly to FIG. 7 in which RUs having various sizes are used, a 26-RU, a 52-RU, a 106-RU, a 242-RU, a 484-RU, and the like may be used in an example of FIG. 8. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 8, when the layout of the RUs is used for a single user, a 484-RU may be used. The specific number of RUs may be changed similarly to FIG. 7.

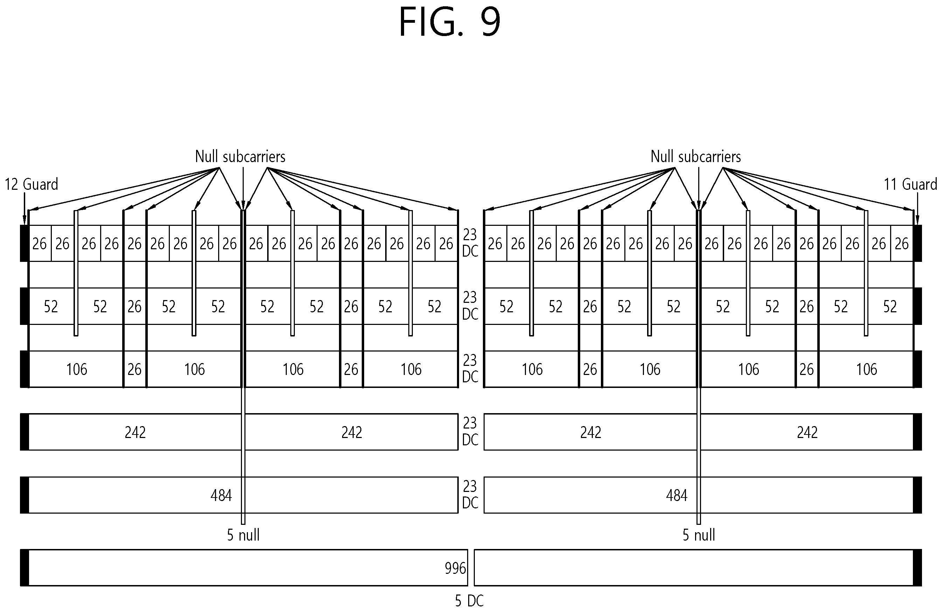

FIG. 9 illustrates the layout of resource units (RUs) used for an 80MHz PPDU. The layout of the resource units (RUs) used in the present disclosure may vary. For example, the layout of the resource units (RUs) used in the 80MHz band may vary.

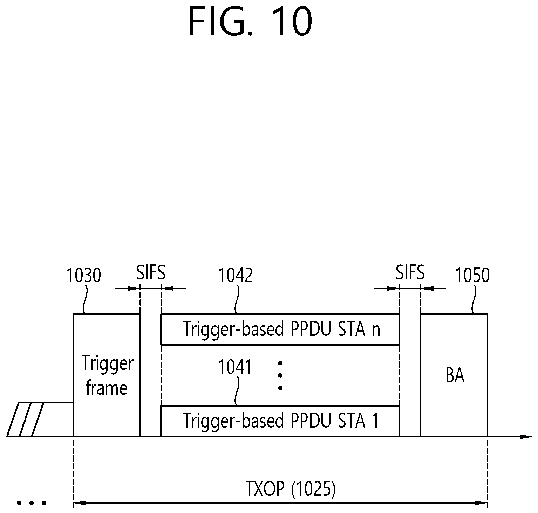

FIG. 10 illustrates an operation related to UL-MU. As shown, a transmitting STA (e.g., AP) can obtain TXOP 1025 by performing channel access through contending (i.e., backoff operation) and transmit trigger frame 1030. That is, the transmitting STA (e.g., AP) can transmit PPDU including trigger frame 1030. When PPDU including trigger frame is received, trigger-based (TB) PPDU is transmitted after delay of SIFS.

TB PPDU 1041, 1042 can be transmitted at the same time and transmitted from multiple STA (e.g., user STA) whose AID is indicated in trigger frame 1030. ACK frame 1050 for TB PPDU can be implemented in various forms. For example, ACK frame 1050 for TB PPDU can be implemented in the form of block ACK (BA).

In FIG. 10, transmission(s) of trigger Frame 1030, TB PPDU 1041, 1042 and/or ACK Frame 1050 can be performed within TXOP 1025.

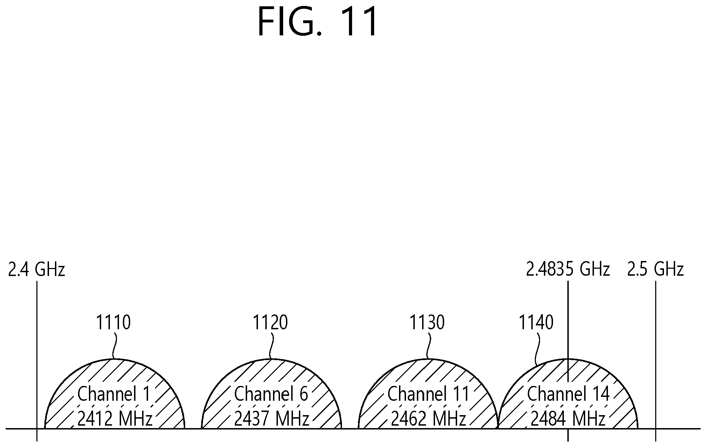

FIG. 11 illustrates an example of channels used/supported/defined within the 2.4 GHz band.

The 2.4 GHz band may also be referred to by other names, such as "first band." Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz within the 2.4 GHz band may have multiple channel indices (e.g., indices 1 through 14). For example, the center frequency of a 20 MHz channel assigned with channel index 1 may be 2.412 GHz, the center frequency of a 20 MHz channel assigned with channel index 2 may be 2.417 GHz, and the center frequency of a 20 MHz channel assigned with channel index N may be (2.407 + 0.005*N) GHz. Channel indices may be referred to by various names, such as channel numbers. The specific numerical values of the channel indices and center frequencies may vary.

FIG. 11 illustrates examples of four channels within the 2.4 GHz band. The illustrated first frequency region 1110 to fourth frequency regions 1140 may each include one channel. For example, the first frequency region 1110 may include channel 1 (a 20 MHz channel with index 1). In this case, the center frequency of channel 1 may be set to 2412 MHz. The second frequency range 1120 may include channel 6. The center frequency of channel 6 may be set to 2437 MHz. The third frequency range 1130 may include channel 11. The center frequency of channel 11 may be set to 2462 MHz. The fourth frequency range 1140 may include channel 14. The center frequency of channel 14 may be set to 2484 MHz.

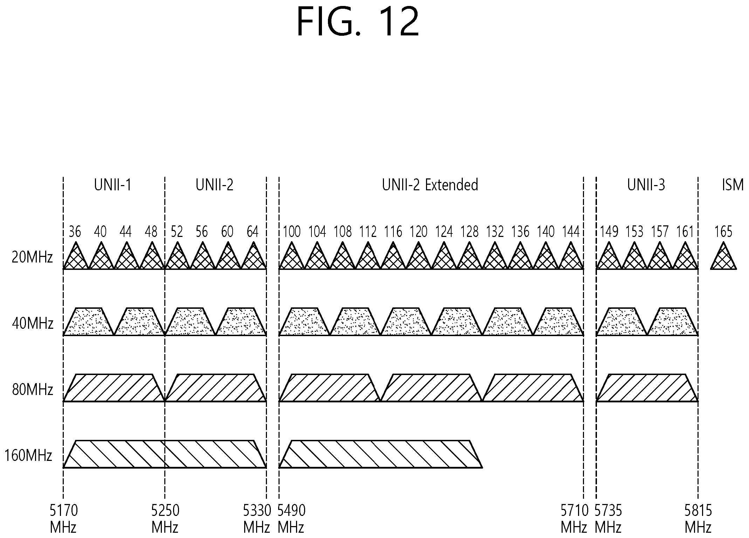

FIG. 12 illustrates an example of channels used/supported/defined within the 5 GHz band.

The 5 GHz band may be referred to by other names, such as "second band" or "band." The 5 GHz band may refer to a frequency range in which channels with a center frequency of 5 GHz or more but less than 6 GHz (or less than 5.9 GHz) are used/supported/defined. Alternatively, the 5 GHz band may include multiple channels between 4.5 GHz and 5.5 GHz. The specific numerical values shown in FIG. 12 may vary.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Multiple channels may be configured within the 5 GHz band, and the bandwidth of each channel may vary, such as 20 MHz, 40 MHz, 80 MHz, or 160 MHz. For example, the 5170 MHz to 5330 MHz frequency range within UNII-1 and UNII-2 may be divided into eight 20 MHz channels. The 5170 MHz to 5330 MHz frequency range can be divided into four channels across a 40 MHz frequency band. The 5170 MHz to 5330 MHz frequency range can be divided into two channels across an 80 MHz frequency band. Alternatively, the 5170 MHz to 5330 MHz frequency range can be divided into one channel across a 160 MHz frequency band.

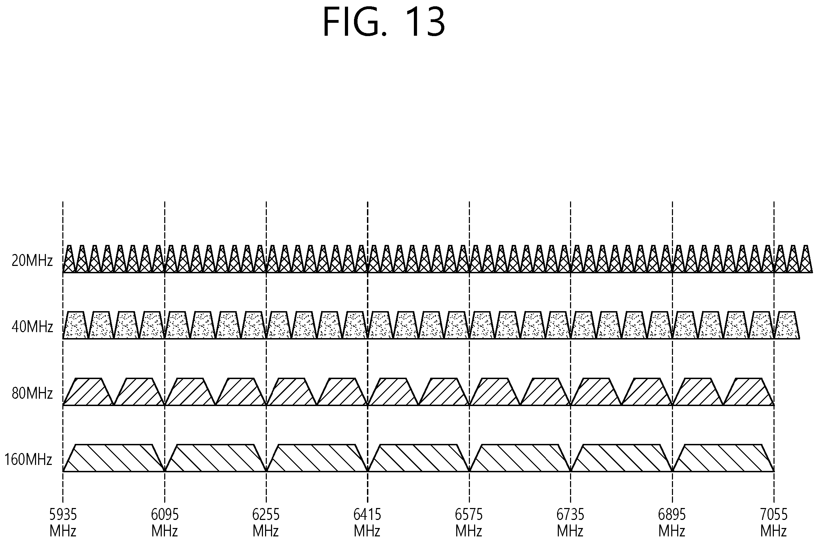

FIG. 13 illustrates an example of channels used, supported, and defined within the 6 GHz band.

The 6 GHz band may also be referred to by other names, such as the third band. The 6 GHz band may refer to a frequency range in which channels with center frequencies above 5.9 GHz are used, supported, and defined. The specific numbers shown in FIG. 13 may vary.

For example, the 20 MHz channel in FIG. 13 may be defined starting from 5.940 GHz. Specifically, the leftmost channel among the 20 MHz channels in FIG. 13 may have an index of 1 (or channel index, channel number, etc.), and a center frequency of 5.945 GHz may be assigned. That is, the center frequency of the index N channel may be determined as (5.940 + 0.005*N) GHz.

Accordingly, the indexes (or channel numbers) of the 20 MHz channels of FIG. 13 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, It can be 197, 201, 205, 209, 213, 217, 221, 225, 229, 233. Also, according to the (5.940 + 0.005*N) GHz rule mentioned above, the indices of the 40 MHz channels in FIG. 13 can be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Meanwhile, STAs having data available for transmission may perform clear channel assessment (CCA) for sensing a medium during a specific period (for example, distributed coordination function (DCF) inter-frame space (DIFS)) before transmitting data. At this time, if the medium is idle, the STA can perform transmission using the medium. However, if the medium is busy, it can be assumed that several STAs are already waiting to use the medium, and the STA can transmit data after waiting for a random backoff duration in addition to the DIFS. At this time, the random backoff duration allows collision avoidance, because when it is assumed that there are several STAs for transmitting data, each STA probabilistically has a different backoff duration value and eventually has a different transmission time. Once one STA starts transmission, other STAs cannot use the medium.

In a random backoff procedure, if a specific medium changes from a busy state to an idle state, several STAs start preparation for sending data. At this time, in order to minimize collisions, STAs intending to transmit data respectively select a random backoff count, and wait for a slot time corresponding to the selected counter. The random backoff count is a pseudo-random integer value and one of values uniformly distributed in a range of [0 CW] is selected. CW means a contention window. The CW parameter takes a CWmin value as an initial value, but if transmission fails, the value is increased by two times. For example, if an ACK response for a transmitted data frame has not been received, it can be considered that a collision has occurred. If the CW value reaches a CWmax value, the CWmax value is maintained until data transmission succeeds, and if data transmission succeeds, the CW value is reset to the CWmin value. At this time, CW, CWmin, and CWmax may be expressed as 2^n-1 for convenience of implementation and operation. Meanwhile, when a random backoff procedure starts, a STA selects a random backoff count within a range of [0 CW], and then continues to monitor the medium while a backoff slot is counted down. If the medium becomes busy in the meantime, it stops the countdown and then resumes the countdown of the remaining backoff slots when the medium becomes idle again.

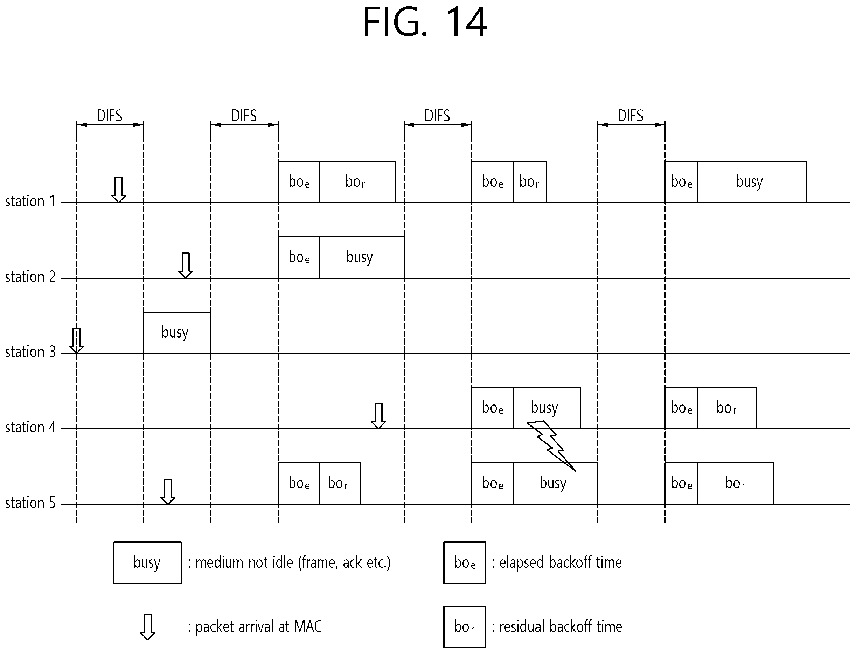

FIG. 14 shows an example of a random backoff procedure.

Referring to FIG. 14, when several STAs have data they intend to send, in the case of STA3, a data frame can be immediately transmitted because the medium is idle for as long as DIFS, and the remaining STAs wait for the medium to become idle. Since the medium has been idle for a while, several STAs would monitor an opportunity to use the medium. Therefore, each STA selects a random backoff count, and at this time, STA 2, which has selected the smallest backoff count, can transmit a data frame. After the transmission of STA2 ends, the medium becomes idle again and STAs resume the countdown for the backoff duration that was previously stopped. STA 5, which had the next smallest random backoff count value and stopped the countdown for a moment when the medium was busy, starts transmission of a data frame after counting down the remaining backoff slots, but a collision may occur as it happens to overlap with a random backoff count value of STA 4. At this time, since both STAs do not receive an ACK response after data transmission, both STAs select a random backoff count value again after increasing CW by two times.

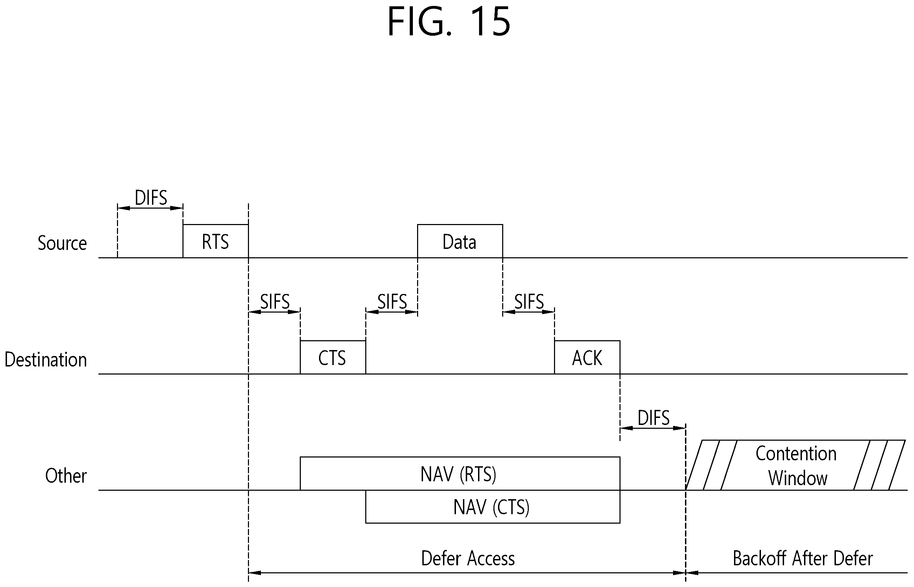

FIG. 15 illustrates an example of a procedure related to NAV setting.

Referring to FIG. 15, when a Source (e.g., an AP STA/non-AP STA) intending to transmit data transmits a request-to-send (RTS) frame to a Destination (e.g., an AP STA/non-AP STA) receiving the data, the Destination can transmit a clear-to-send (CTS) frame to neighboring stations to notify them that it will receive the data. In other words, the Destination designated as the receiver through the RTS frame can transmit a CTS frame. If the Source that transmitted the RTS frame receives the CTS frame, the Source can initiate data transmission to the Destination.

Meanwhile, if a STA other than the Destination designated as the receiver through the RTS frame receives the RTS frame, or if a STA other than the Source that transmitted the RTS frame receives the CTS frame, the STA can configure a network allocation vector (NAV). A STA that has set a NAV may not transmit data during the NAV period, which allows the STA to avoid collisions between the STA and the Source/Destination. On the other hand, if the Destination designated as the receiver through the RTS frame receives the RTS frame, or if the Source that transmitted the RTS frame receives a CTS frame, the Source/Destination does not set a NAV.

If a CTS frame (e.g., PHY-RXSTART.indication primitive) is not received within a certain period from the time the RTS frame is received (e.g., the time when the MAC receives the PHY-RXEND.indication primitive corresponding to the RTS frame), STAs that have set or updated a NAV through the RTS frame may reset the NAV (e.g., to 0). The certain period may be (2*aSIFSTime + CTS_Time + aRxPHYStartDelay + 2*aSlotTime). The CTS_Time can be calculated based on the length and data rate of the CTS frame indicated by the RTS frame.

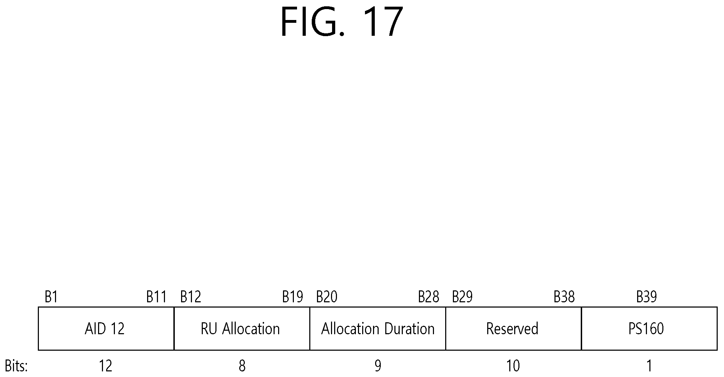

For convenience of description, FIG. 17 illustrates setting or updating the NAV through the RTS frame or the CTS frame. However, NAV setting/resetting/updating can also be performed based on the duration field of various other frames, such as non-HT PPDU, HT PPDU, VHT PPDU, or HE PPDU (e.g., the duration field in the MAC header of a MAC frame). For example, if the RA field in a received MAC frame does not match its own address (e.g., MAC address), The STA may set, reset, or update the NAV based on the value of the Duration field in the received MAC frame.

A non-AP STA shall maintain two NAVs, and an AP may maintain two NAVs: an intra-BSS NAV and a basic NAV. The intra-BSS NAV may be updated/set by an intra-BSS PPDU. The basic NAV may be updated /set by an inter-BSS PPDU or a PPDU that cannot be classified as intra-BSS or inter-BSS.

The MAC frames included in the data field of the PPDU of the present disclosure can be classified into various types. For example, the MAC frames of the present disclosure can be classified into control frames, management frames, and data frames.

For example, the management frame includes Association Request, Association Response, Reassociation Request, Reassociation Response, Probe Request, Probe Response, Beacon, Disassociation, Authentication, and Deauthentication frames/signals defined in conventional WLANs. For the management frame, the value of the type field (B3 and B2) of the MAC header is set to 00. Additionally, the values of the subtype fields (B7, B6, B5, B4) of the MAC header are as follows: Association Request (0000), Association Response (0001), Reassociation Request (0010), Reassociation Response (0011), Probe Request

(0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) of the MAC header are set to 01. Additionally, the values of the subtype fields (B7, B6, B5, B4) of the MAC header are as follows: Trigger

(0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For this data frame, the values of the type fields (B3 and B2) of the MAC header are set to 10.

The data frame may include an aggregated-control (A-Control) subfield. For example, the HT Control field included in the data frame may consist of 32 bits B0 to B31, and the A-Control subfield may consist of B2 to B31 of the HT Control field with B0 and B1 set to 1. In other words, the A-Control subfield may be 30 bit information.

The 30-bit A-Control subfield may have a structure as shown in <Table 1> below:

**[Table 1]**

| | |
|---|---|
| Control List | Padding |

The bit size (or number of bits) of the Control List subfield can be variable. The bit size of the Padding can be 0 or more. A Control List can contain one or more Control subfields. Each Control subfield can have a structure as shown in Table 2 below:

**[Table 2]**

| | |
|---|---|
| Control ID | Control Information |

The bit size of the Control ID subfield can be 4 (e.g., B0 to B3). The bit size of the Control Information can be variable. The values of the Control ID subfield can be defined as shown in <Table 3> below:

**[Table 3]**

| **Control ID value** | **Meaning** | **Length of the Control Information subfield (bits)** |
|---|---|---|
| 0 | Triggered response scheduling (TRS) | 26 |
| 1 | Operating mode (OM) | 12 |
| 2 | HE link adaptation (HLA) | 26 |
| 3 | Buffer status report (BSR) | 26 |
| 4 | UL power headroom (UPH) | 8 |
| 5 | Bandwidth query report (BQR) | 10 |
| 6 | Command and status (CAS) | 8 |
| 7-14 | Reserved | - |
| 15 | Ones need expansion surely (ONES) | 26 |

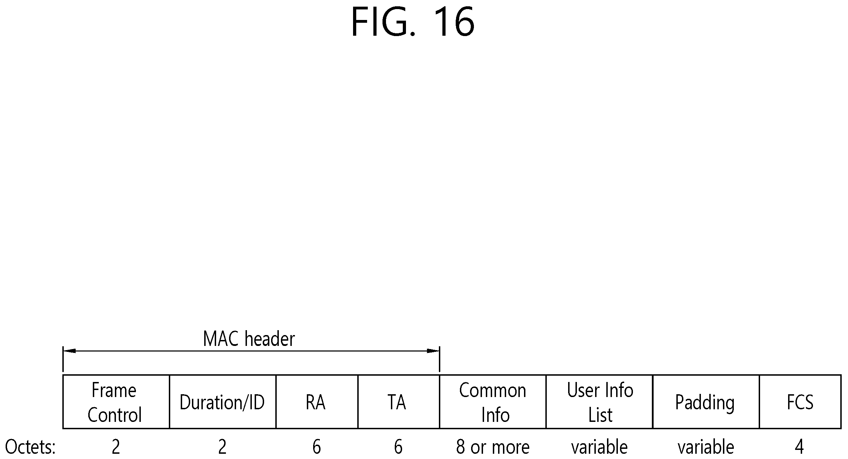

The type of the MAC frame used in the present disclosure may be identified through the type field/information and the subtype field/information included in the frame control field of the header of the MAC frame (i.e., the MAC header). For example, the "trigger frame" of the present disclosure may mean a MAC frame in which the type bits B3 and B2 in the frame control field of the MAC header are set to 01, and the subtype bits B7, B6, B5, and B4 in the frame control field are also set to 0010. Various MAC frames described in the present disclosure are inserted/included in the data field of various PPDUs (e.g., HE/VHT/HE/EHT/UHR PPDUs). FIG. 16 illustrates a trigger frame format. The trigger frame format may also be referred to as the structure of a trigger frame.

Referring to FIG. 16, a trigger frame may include a frame control field, a duration/ID field, a receiver address (RA) field, a transmitter address (TA) field, a Common Info field, a User Info list field, a padding field, and/or a frame check sequence (FCS) field. Optionally, the trigger frame may further comprise a special User Info field between the Common Info field and the User Info list field. The User Info list field may include one or more User Info fields. The frame control field, duration/ID field, RA field, and TA field may constitute a MAC header.

For example, the common information field may comprise a trigger type subfield. The value of the trigger type subfield may indicate a variant of the trigger frame as shown in <Table 4>:

**[Table 4]**

| **Trigger type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

For example, if the value of the trigger type subfield is set to 0, the trigger frame may be a basic trigger frame. For example, if the value of the trigger type subfield is set to 3, the trigger frame may be a multi-user (MU) RTS trigger frame. Meanwhile, according to the EHT (i.e., 802.11be) standard, an AP can allocate a portion of the time duration within the TXOP obtained by the AP to support peer-to-peer (P2P) transmission to a non-AP STA. To allocate a portion of the time duration within a TXOP, a TXOP Sharing Mode subfield may be defined within the Common Info Field of the MU-RTS Trigger frame. When the value of the TXOP Sharing Mode subfield is non-zero, such a MU-RTS trigger frame may be referred to as a MU-RTS TXOP Sharing (TXS) Trigger frame (TF). A description of the values of the TXOP sharing mode subfield is shown in <Table 5> below:

**[Table 5]**

| **Triggered TXOP Sharing Mode subfield value** | **Description** |
|---|---|
| 0 | MU-RTS that does not initiate MU-RTS TXOP sharing procedure. |
| 1 | MU-RTS that initiates MU-RTS TXOP sharing procedure wherein a scheduledSTA can only transmit MPDU(s) addressed to its associated AP. |
| 2 | MU-RTS that initiates MU-RTS TXOP sharing procedure wherein a scheduled STA can transmit MPDU(s) addressed to its associated AP or addressed to another STA. |
| 3 | Reserved. |

For example, if the TXOP sharing mode subfield has a value of 1, one or more (non-TB) PPDU transmissions to the AP can be supported. If the TXOP sharing mode subfield has a value of 2, both (non-TB) PPDU transmission to the AP and P2P transmission can be supported. In this disclosure, the MU-RTS TXS TF may also be referred to simply as a TXS trigger frame.

FIG. 17 illustrates an example of the User Info field format of the MU-RTS TXS TF.

Referring to FIG. 17, the User Info field may include an AID subfield, an RU allocation subfield, an allocation duration subfield, reserved bits, and/or a PS160 subfield.

The AID subfield may indicate the AID for the corresponding STA. The RU allocation subfield may indicate RU allocation for the corresponding STA.

The allocation duration subfield may include 9 bits from B20 to B28 in the MU-RTS TXS TF and may indicate an allocation duration in 16us units. In this case, the maximum length of the allocation duration indicated by the allocation duration subfield may be 2^9 = 8192 us.

The PS160 subfield may indicate the primary 160 MHz channel or the secondary 160 MHz channel to which RU or MRU allocation applies.

Meanwhile, many APs are being installed adjacent to each other to enable STAs to maintain continuous WLAN connections over a wider area. However, overlapping BSSs of multiple APs can lead to issues such as radio interference and transmission collisions between APs. To address these issues, various technologies related to coordination between APs in the frequency, time, and spatial domains (e.g., RU selection, joint transmission, nulling) have been proposed. Various issues that may arise during inter-AP coordination need to be addressed.

In the present disclosure, a multi-AP operation is proposed. The multi-AP operation may be based on a technique of reducing various interferences such as inter-symbol interference (ISI) through coordination with a neighboring AP (for example, an AP located in an overlapping BSS).

For example, the multi-AP operation may be classified into a multi-AP coordination scheme (or, a coordination scheme) based on various techniques/types/formats/protocols. For example, the coordination scheme may include coordinated TDMA (Co-TDMA) that distinguishes radio resources allocated to several APs based on a time axis (time domain). Additionally or alternatively, the coordination scheme may include coordinated OFDMA (C-OFDMA) that distinguishes radio resources allocated to several APs based on a frequency axis (time domain). Additionally or alternatively, the coordination scheme may include coordinated spatial reuse (Co-SR) that applies spatial reuse (SR) to at least one AP. Additionally or alternatively, the coordination scheme may include coordinated beamforming (Co-BF)/nulling that transmits by nulling interference occurring in a neighbor (for example, an adjacent AP/STA, and/or OBSS AP/OBSS STA). Additionally or alternatively, the coordination scheme may include AP selection in which an AP having a good channel state among adjacent APs (for example, at least one AP located in a BSS or OBSS and having an excellent channel state) performs transmission. Additionally or alternatively, the coordination scheme may include joint transmission (JTX) or JT in which a plurality of APs (for example, a plurality of APs included in the same BSS/OBSS, or a plurality of APs included in mutually different BSSs/OBSSs) simultaneously perform transmission and reception by coordinating, and JTX/JT may be implemented based on joint beamforming or joint MU-MIMO.

In the present disclosure, "multi-AP (coordination) operation" may also be referred to as "multi-AP (coordination) transmission". In addition, "multi-AP (coordination) operation/transmission" and "multi-AP coordination scheme (or, coordination scheme)" may be used interchangeably.

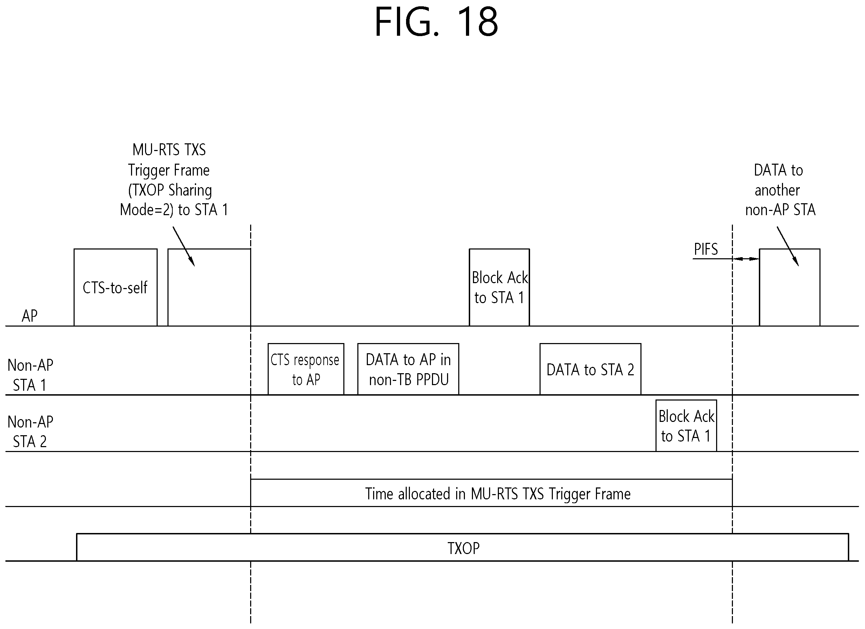

FIG. 18 illustrates an example of operation when the TXOP sharing mode subfield has a value of 2.

Referring to FIG. 18, the AP may transmit an MU-RTS TXS TF comprising allocation (time) duration information (e.g., Time allocated in MU-RTS TXS Trigger Frame) to non-AP STA 1. Non-AP STA 1 may transmit a CTS in response to the MU-RTS TXS TF and perform P2P transmission to non-AP STA 2.

When the triggered TXOP sharing protocol is utilized for multi-AP coordination, transmissions within the BSS of each coordinating AP are divided into time units, so that each coordinating AP can perform frame exchange without affecting other coordinating APs.

In this disclosure, "frame exchange (FE)" may include a frame transmission and/or reception operation between STAs. The STA may be an AP or a non-AP STA. Herein, a frame may include various types of frames (e.g., a data frame, a control frame, and a management frame).

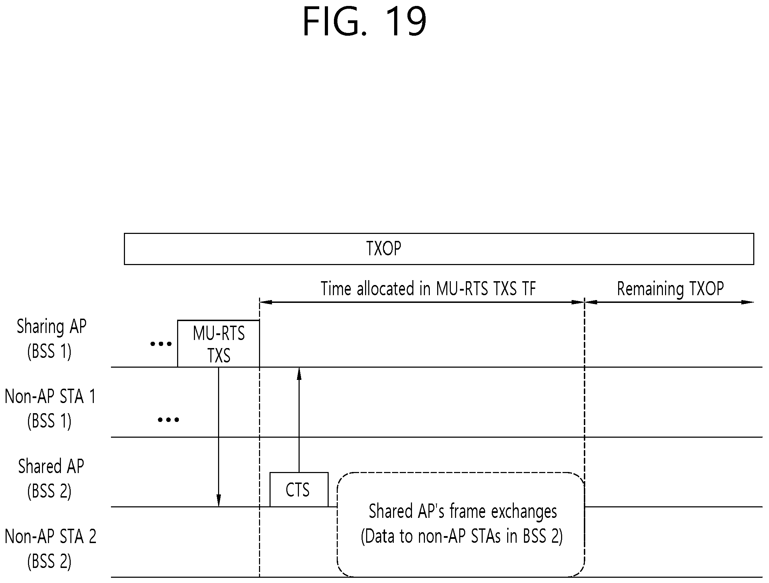

FIG. 19 illustrates an example of coordinated time division multiple access (C-TDMA) between coordinating APs.

For example, C-TDMA can mean that each coordinating AP exchanges frames without affecting other coordinating APs by dividing transmissions within the BSS of each coordinating AP by time units.

When the triggered TXS protocol is applied to multi-AP coordination operations, the AP in the triggered TXS protocol may be the AP that shares the TXOP in the multi-AP coordination operation, and the STA in the triggered TXS protocol may be the AP that is granted the shared TXOP in the multi-AP coordination operation. In this disclosure, the AP that shares the TXOP may be referred to as a sharing AP (SAP), and the AP that is granted the TXOP by the SAP may be referred to as a shared AP (DAP). The term "SAP" here does not limit the entities sharing the TXOP to only AP STAs - the SAP may also include non-AP STAs that share the TXOP. Furthermore, the term "DAP" does not limit the entity that is granted the shared TXOP to only being an AP STA, and a DAP may also include non-AP STAs that is granted the shared TXOP (or, that transmit and receive with an AP STA that is granted the shared TXOP). Furthermore, frame exchanges performed by a DAP with non-AP STAs belonging to the DAP BSS or SAPs during the allocated time (i.e., the time allocated by the MU-RTS TXS TF in FIG. 19, which is an allocation duration for the DAP/AP2 within a TXOP indicated by the MU-RTS TXS TF transmitted from the SAP) may be referred to as BSS frame exchanges (FEs) of the DAP. For example, RTS/CTS frame exchanges between a DAP and a non-AP STA followed by data frame transmission and block ACK frame responses, UL data frame transmissions by non-AP STAs based on trigger frames transmitted from the DAP, and/or data frame transmissions by the DAP based on trigger frames transmitted from the SAP may be performed.

In order for multi-AP coordination to be achieved between two APs, the two APs may be in a connected/associated state with each other, and/or after performing a negotiation procedure for exchanging capability information/requirement information of each other in advance, may perform multi-AP transmission (e.g., coordinated time division multiple access (Co-TDMA), coordinated orthogonal frequency division multiple access (C-OFDMA), coordinated spatial reuse (Co-SR), coordinated beamforming (Co-BF), AP selection, or joint transmission (J-TX)) based on the obtained information. That is, in order for the multi-AP transmission to be smoothly performed, the configuration/management of the multi-AP coordination, and/or a negotiation procedure for transmission based on a specific multi-AP coordination scheme need to be performed in advance between the SAP and the DAP described above. Through the negotiation procedure, a multi-AP set may be established/configured. Therefore, the negotiation procedure may also be referred to as a multi-AP set establishment/configuration procedure.

A triggered TXS protocol provides a method for a TXOP return. For example, a TXOP return for a UL transmission (i.e., TXS mode = 1) may be based on that a UL frame from a STA that is allocated a TXOP (or, an allocation duration) is not received during a PIFS time. For example, a TXOP return for a P2P transmission and/or a UL transmission (i.e., TXS mode = 2) may be based on receiving a QoS Null or QoS data frame comprising a command and status (CAS) control field indicating a return of the TXOP from a STA that is allocated the TXOP (or, an allocation duration). In an operation scheme of Co-TDMA, a TXOP return method such as the TXOP return method when TXS mode = 1 (in EHT) may not be applied. In addition, since the QoS Null/QoS data frame comprising the CAS control field in the TXOP return method when TXS mode = 2 can be exchanged only between STAs associated with an AP, a new TXOP return method between APs for Co-TDMA needs to be defined in the operation scheme of Co-TDMA.

Therefore, the present disclosure provides a method and apparatus for a TXOP return between APs for an efficient Co-TDMA operation. For example, the present disclosure provides a method and apparatus for a DAP to return a TXOP allocated from an SAP. For example, according to various embodiments of the present disclosure, indication information indicating whether a return of a TXOP shared by an SAP is required may be defined, and an unnecessary TXOP return may not be performed by utilizing the corresponding indication information. For example, in the present disclosure, a frame type for a TXOP return is defined, and the present disclosure provides a method for solving a hidden node problem that may occur at the time of a TXOP return and/or a channel clear assessment (CCA) method for securing a remaining TXOP after a TXOP return (and an apparatus for implementing the methods).

Through the TXOP return method proposed in the present disclosure, the DAP may return the TXOP to the SAP, and the SAP may occupy a medium again and perform an additional frame exchange.

Specific designations (names) proposed in the present disclosure may be changed, and are not limited.

Specific designations/names proposed in the present disclosure may be changed, and are not limited thereto.

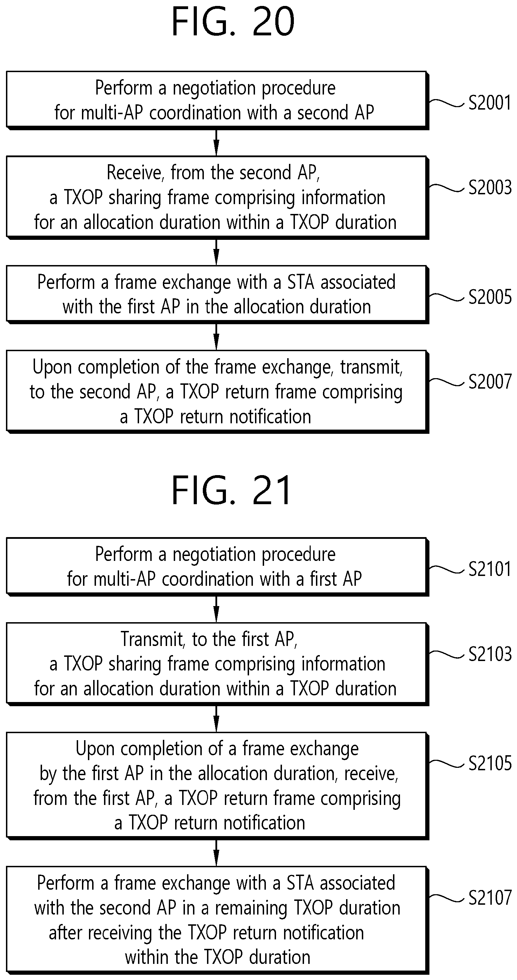

FIG. 20 shows an example of a method performed by a first AP for a TXOP return in a multi-AP coordination environment according to an embodiment of the present disclosure. The first AP may be a DAP, and the second AP may be an SAP.

Referring to FIG. 20, in step S2001, the first AP may perform a negotiation procedure for multi-AP coordination with a second AP.

In step S2003, the first AP may receive from the second AP a TXOP sharing frame comprising information for an allocation duration within a TXOP duration.

In step S2005, the first AP may perform a frame exchange with a station (STA) associated with the first AP in the allocation duration.

In step S2007, upon completion of the frame exchange, the first AP may transmit to the second AP a TXOP return frame comprising a TXOP return notification.

According to various embodiments, the first AP may receive from the second AP a TXOP return indication comprising at least one bit or field indicating that a TXOP return is required in the multi-AP coordination. The TXOP return frame may be transmitted based on the TXOP return indication.

According to various embodiments, the TXOP return indication may be received through at least one of a beacon frame received from the second AP, a frame received from the second AP in the negotiation procedure, an initial control frame (i.e., initial control frame) received from the second AP to notify that coordination is scheduled to start or to exchange additional information related to coordination, or a TXOP sharing frame.

According to various embodiments, the TXOP return frame may be transmitted without the first AP receiving a TXOP return indication from the second AP.

According to various embodiments, the frame exchange may be completed upon an expiry of the allocation duration. The TXOP return frame may be transmitted upon an expiry of the allocation duration.

According to various embodiments, the frame exchange may be completed before the allocation duration expires. The TXOP return frame may be transmitted upon completion of the frame exchange before the allocation duration expires. When the TXOP return frame is transmitted, the first AP may release or truncate a channel occupied by the first AP for the frame exchange for the allocation duration.

According to various embodiments, the TXOP return notification may comprise at least one bit or field notifying a TXOP return in the multi-AP coordination.

According to various embodiments, the TXOP return frame may be a contention-free (CF) end frame. The TXOP return notification may be related to a receiver address (RA) field of the CF end frame set to an address of the second AP.

According to various embodiments, the TXOP return frame may be a multi-user request to send (MU-RTS) trigger frame. The TXOP return notification may be related to: i) a user information field of the MU-RTS trigger frame comprising information of the second AP; ii) a receiver address (RA) field of the MU-RTS trigger frame set to an address of the second AP and an association identifier (AID) field of the MU-RTS frame set to an arbitrary value; or iii) a special user information field of the MU-RTS trigger frame comprising information of the second AP. The information of the second AP may comprise at least one of an AID of the second AP or an AP ID of the second AP allocated for the multi-AP coordination.

According to various embodiments, the TXOP return frame may be a block acknowledgment request (BAR) frame. The TXOP return notification may comprise (or, may be related to) at least one of: a receiver address (RA) field of the BAR frame set to a basic service set identifier (BSSID), a BSS color, or an address of the second AP; an association identifier (AID) of the second AP; or an AP ID of the second AP allocated for multi-AP coordination.

According to various embodiments, the TXOP return frame may be a management frame comprising an aggregated (A)-Control field. The TXOP return notification may be related to a coordination information report (CIR) control field, or a command and status (CAS) control field in which a reserve direction grant (RDG)/More PPDU field is set to 0.

According to various embodiments, the TXOP return frame may comprise an action frame related to a management frame. The TXOP return notification may be included in an action field of the action frame.

According to various embodiments, the TXOP return frame may be a buffer status report poll (BSRP) trigger frame. The TXOP return notification may be related to: i) a user information field of the BSRP trigger frame comprising information of the second AP; ii) a receiver address (RA) field of the BSRP trigger frame set to an address of the second AP and an association identifier (AID) field of the MU-RTS frame set to an arbitrary value; or iii) a special user information field of the BSRP trigger frame comprising information of the second AP. The information of the second AP may comprise at least one of an AID of the second AP or an AP ID of the second AP allocated for the multi-AP coordination.

According to various embodiments, the TXOP return frame may be a multi-STA block acknowledgment (BA) frame. The TXOP return notification may comprise (or, may be related to) at least one of: a receiver address (RA) field of the multi-STA BA frame set to an address of the second AP; an association identifier (AID) of the second AP; or an AP ID of the second AP allocated for multi-AP coordination.

FIG. 21 shows an example of a method performed by a second AP for a TXOP return in a multi-AP coordination environment according to an embodiment of the present disclosure. The first AP may be a DAP, and the second AP may be an SAP.

Referring to FIG. 21, in step S2101, the second AP may perform a negotiation procedure for multi-AP coordination with a first AP.

In step S2103, the second AP may transmit, to the first AP, a TXOP sharing frame comprising information for an allocation duration within a TXOP duration.

In step S2105, upon completion of a frame exchange by the first AP in the allocation duration, the second AP may receive, from the first AP, a TXOP return frame comprising a TXOP return notification.

In step S2107, the second AP may perform a frame exchange with a station (STA) associated with the second AP in a remaining TXOP duration after receiving the TXOP return notification within the TXOP duration.

According to various embodiments, the remaining TXOP duration may comprise: i) a time duration after the allocation duration, based on the frame exchange being completed upon expiration of the allocation duration, and ii) a time duration after the allocation duration and a time duration after receiving the TXOP return frame within the allocation duration, based on the frame exchange being completed before the allocation duration expires.

Hereinafter, detailed implementation for a TXOP return in a multi-AP coordination environment is described.

The present disclosure provides a method and apparatus for an SAP to receive a return of TXOP provided to a DAP (or for a DAP to return a TXOP provided from an SAP) in a multi-AP coordination environment (e.g., Co-TDMA environment). Specifically, when sharing a TXOP, the SAP may indicate a necessity of a TXOP return as to whether or not the DAP should perform a TXOP return within a time shared by the SAP (e.g., an allocation duration). In addition, a TXOP return method/apparatus that the DAP can perform based on the corresponding TXOP return indication is provided. Alternatively, without a separate TXOP return indication, the DAP may be (pre-)configured to essentially perform a TXOP return in a Co-TDMA operation, or may be (pre-)configured such that a TXOP return is performed according to AP selection/implementation. When a TXOP return must essentially be performed without a separate TXOP return indication, the DAP may perform a TXOP return procedure presented in "II. TXOP return procedure for Co-TDMA" without performing a TXOP return method presented in "I. TXOP return method based on TXOP return indication for Co-TDMA" below.

The TXOP return method/apparatus for Co-TDMA proposed in the present disclosure can be defined/designed as follows.

### I. TXOP return method based on TXOP return indication for Co-TDMA

A method of instructing, by an SAP, a DAP to perform a TXOP return in a Co-TDMA procedure is proposed. Specifically, in a TXOP sharing procedure, the SAP may indicate to the DAP whether a TXOP return is required.

### I-1. TXOP return indication method utilizing or based on existing field

In order to indicate whether a TXOP return is required by an SAP in a Co-TDMA procedure, a "TXOP Return Support in Triggered TXOP Sharing Mode 2" field indicating support for a TXOP return in EHT TXS may be utilized. For example, a beacon frame transmitted periodically by APs and/or a frame transmitted/received in a multi-AP set configuration procedure (or, a multi-AP negotiation procedure) for multi-AP coordination (e.g., a coordination request frame/coordination response frame/trigger frame/frame related to a TB PPDU) may comprise a field indicating whether a TXOP return is required in a Co-TDMA procedure (e.g., a TXOP Return Support in Triggered TXOP Sharing Mode 2 field). Therefore, such an indication as to whether a TXOP return is required can be delivered in a long-term interval. For example, the TXOP Return Support in Triggered TXOP Sharing Mode 2 field included in an EHT Capabilities Information field may be reused in a UHR MAC Capabilities Information field that can be newly defined in UHR. At this time, when a new TXOP sharing mode (i.e., TXS mode) is defined for a TXOP sharing procedure in Co-TDMA, a new field based on the TXOP Return Support in Triggered TXOP Sharing Mode 2 field (e.g., a TXOP Return Support in Triggered TXOP Sharing Mode 3 field) may be defined, or the name of the TXOP Return Support in Triggered TXOP Sharing Mode 2 field may be changed and utilized.

For example, a field indicating to the DAP by the SAP that a TXOP return is required may be defined as a "TXOP Return Support in Triggered TXOP Sharing Mode" field.

The TXOP Return Support in Triggered TXOP Sharing Mode field may indicate that transmitting, by the DAP, a frame in which an RA field is set to an address of the SAP within a time allocated to the DAP (e.g., an allocation duration) in a specific TXS mode is supported, and/or may indicate that the DAP should transmit a frame in which an RA field is set to an address of the SAP within an allocated time (e.g., an allocation duration), and/or may indicate that the DAP should transmit a frame comprising information for the SAP (e.g., an AID of the SAP and/or a new AID defined for multi-AP coordination) within an allocated time (e.g., an allocation duration), and/or may indicate that the DAP should transmit a frame for returning a TXOP within an allocated time (e.g., an allocation duration).

For example, the TXOP Return Support in Triggered TXOP Sharing Mode field may comprise 1 bit indicating whether a TXOP return is supported or requested. Bit 0 may indicate that the DAP does not need to perform a TXOP return within the allocated time (e.g., allocation duration). Bit 1 may indicate that the DAP can or should perform a TXOP return within the allocated time (e.g., allocation duration).

Therefore, when an AP participating in multi-AP coordination receives a frame in which the TXOP Return Support in Triggered TXOP Sharing Mode field is set to 1 from the SAP during a Co-TDMA operation (e.g., a beacon frame/coordination request frame/coordination response frame/trigger frame/frame related to a TB PPDU), the AP can perform a TXOP return after completing a frame exchange within the allocated time (or, allocation duration).

### I-2. TXOP return indication method utilizing or based on a new field

In addition to the method utilizing the TXOP Return Support in Triggered TXOP Sharing Mode 2 field indicating support for a TXOP return in EHT TXS, a new field may be defined to indicate whether a TXOP return is required in a Co-TDMA procedure. For example, an MU-RTS TXS TF (or a new type of TF) that the SAP can transmit to the DAP for a TXOP sharing may comprise a new field indicating whether a TXOP return is required. The new field at this time may be defined by utilizing a reserved bit of a Common Info field, a User Info field, or a Special User Info field in the MU-RTS TXS TF (or a new type of TF). For example, when a new field indicating whether a TXOP return is required is included in a Common Info field or a Special User Info field of a trigger frame (e.g., MU-RTS TXS TF, a new type of TF), STAs/APs receiving the corresponding trigger frame can identify whether a TXOP return is required through the new field. As another example, when a new field indicating whether a TXOP return is required is included in a User Info field of a trigger frame (e.g., MU-RTS TXS TF, a new type of TF), only a DAP associated with the corresponding User Info field can identify whether a TXOP return is required through the new field.

For example, a new field by which the SAP indicates to the DAP whether a TXOP return is required may be defined as a "TXOP Return Request" field. The TXOP Return Request field may indicate that transmitting, by the DAP, a frame in which an RA field is set to an address of the SAP within a time allocated to the DAP (e.g., allocation duration) in a specific TXS mode is supported, and/or may indicate that the DAP should transmit a frame in which an RA field is set to an address of the SAP within an allocated time (e.g., allocation duration), and/or may indicate that the DAP should transmit a frame comprising information for the SAP (e.g., an AID of the SAP and/or a new AID defined for multi-AP coordination) within an allocated time (e.g., allocation duration), and/or may indicate that the DAP should transmit a frame for returning a TXOP within an allocated time (e.g., allocation duration).

For example, the TXOP Return Request field may comprise 1 bit indicating whether a TXOP return is supported and/or required. Bit 0 may indicate that the DAP does not need to perform a TXOP return within the allocated time (e.g., allocation duration). Bit 1 may indicate that the DAP can or should perform a TXOP return within the allocated time (e.g., allocation duration).

Therefore, when an AP participating in multi-AP coordination receives a frame in which the TXOP Return Request field is set to 1 from the SAP during a Co-TDMA operation, the corresponding AP can perform a TXOP return after completing a frame exchange within the allocated time (e.g., allocation duration).

The TXOP return method based on the TXOP return indication for Co-TDMA may be specifically performed as follows. First, the SAP may indicate whether a TXOP return is required based on the aforementioned TXOP return indication scheme according to whether a remaining TXOP exists after sharing a TXOP with the DAP during a Co-TDMA operation.

When a remaining TXOP of the SAP does not exist (that is, when a TXOP obtained by the SAP expires after sharing the TXOP with the DAP), a field indicating whether a TXOP return is required (e.g., a TXOP Return Support in Triggered TXOP Sharing Mode field, a TXOP Return Request field) may have a value of 0. The DAP receiving the indication that a TXOP return is not required may perform operations as below:
Case 1) When completing a frame exchange without an allocated time (e.g., allocation duration) remaining

Since the frame exchange has been completed without the allocated time (e.g., allocation duration) remaining, the DAP may not perform a particular procedure.

Case 2) When an allocated time (e.g., allocation duration) remains by completing a frame exchange early

When a frame exchange is completed early before an allocated time (e.g., allocation duration) expires, a remaining TXOP of the DAP may exist. When the remaining TXOP time is somewhat short, the DAP may wait for the allocated time (e.g., allocation duration) to expire without performing a particular procedure during the remaining TXOP time (Case 2-1). When it is determined that the remaining TXOP time is long enough to perform a separate frame exchange, the DAP may transmit a frame for returning a TXOP (e.g., a CF-End frame), and release/truncate a channel/medium in use. To this end, an exception rule for transmitting, by the DAP allocated a time within a TXOP duration, a frame for a TXOP return (e.g., a CF-End frame) to the SAP may be defined. Therefore, in a situation where a TXOP return is not required because a remaining TXOP of the SAP does not exist, the DAP may not perform an unnecessary TXOP return.

Unlike this, when a remaining TXOP of the SAP exists (that is, when an additional frame exchange can be performed by receiving a TXOP returned from the DAP after sharing the TXOP with the DAP), a field indicating whether a TXOP return is required (e.g., a TXOP Return Support in Triggered TXOP Sharing Mode field, a TXOP Return Request field) may have a value of 1. The SAP and/or the DAP receiving the indication that a TXOP return is required may perform operations as below:
Case 3) When completing a frame exchange without an allocated time (e.g., allocation duration) remaining

When completing a frame exchange without an allocated time (e.g., allocation duration) remaining (or, right before an allocated time (e.g., allocation duration) ends), the SAP may start an individual frame exchange of the SAP after a PIFS from when the DAP transmits a last PPDU (Case 3-1). That is, based on a time when the allocated time ends or right before that, if the DAP does not transmit a PPDU during a PIFS, the SAP starts an individual frame exchange immediately.

Alternatively, when sharing a TXOP with the DAP, the SAP may allocate a time including a time for a TXOP return (e.g., a time for transmitting a TXOP return frame), and the DAP may terminate the allocated time by performing a TXOP return procedure (Case 3-2). That is, the DAP can always perform a TXOP return procedure when finishing the allocated time. A specific TXOP return procedure is described in "II. TXOP return procedure for Co-TDMA" to be described later.

Case 4) When an allocated time (e.g., allocation duration) remains by completing a frame exchange early

When a frame exchange is completed early, i) when the remaining TXOP time is somewhat short, the DAP may wait for the allocated time (e.g., allocation duration) to expire without performing a particular procedure during the remaining TXOP time. ii) when it is determined that the remaining TXOP time is long enough to perform a separate frame exchange, the DAP may perform a TXOP return procedure. A specific TXOP return procedure is described in "II. TXOP return procedure for Co-TDMA" to be described later.

Alternatively, in a situation where there is a separate TXOP return indication from the SAP (or in a situation where there is no separate TXOP return indication), when a frame/PPDU is not transmitted from the DAP for a certain time (e.g., PIFS, DIFS, EIFS) within the allocated time, the SAP may recover the allocated time according to a CCA result, and this may be considered as a forced TXOP return mode or method. Such a (forced) TXOP return method by the SAP may be implemented immediately after sharing a TXOP or at a time when the allocated time will expire.

### II. TXOP return procedure for Co-TDMA

### II-1. TXOP return procedure using CF-End frame

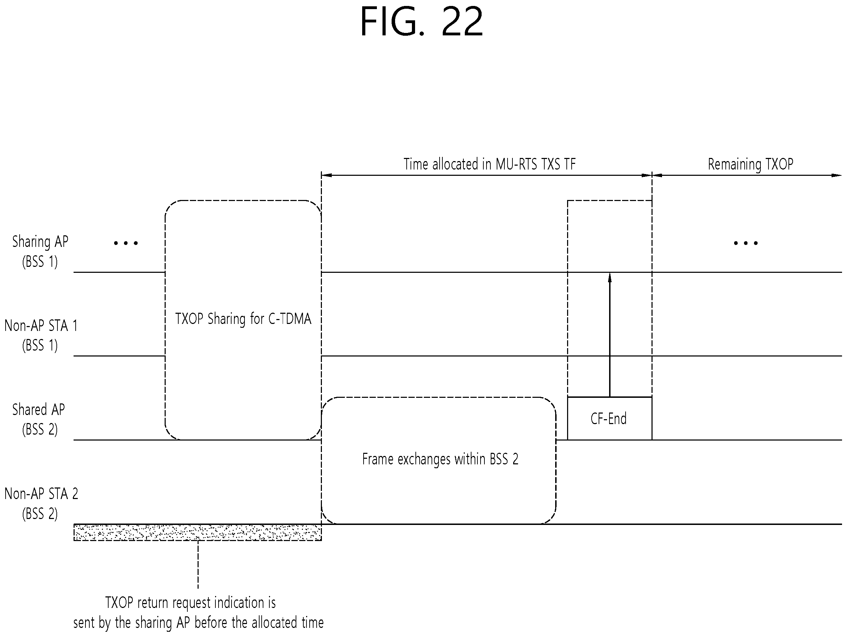

FIG. 22 shows an example of a TXOP return procedure using a CF-End frame according to an embodiment of the present disclosure.

Referring to FIG. 22, when completing a frame exchange, the DAP may perform a TXOP return procedure by transmitting a contention free (CF)-End frame. For example, the DAP may perform a TXOP return procedure for Case 3) and/or Case 4) in "I. TXOP return method based on TXOP return indication for Co-TDMA". The DAP may transmit a CF-End frame in which an RA field comprises an address of the SAP to the SAP for a TXOP return, and the SAP receiving the CF-End frame in which the RA field comprises the address of the SAP may start an individual frame exchange immediately after a SIFS or PIFS from when receiving the CF-End frame for a smooth Co-TDMA operation. At this time, a BSSID field of the CF-End frame may comprise a BSSID of the DAP, a BSS color, or an address of the DAP.

Alternatively, a TXOP return procedure using a CF-End frame may be performed according to a TXOP return rule in Co-TDMA or a selection of the DAP without a separate TXOP return indication from the SAP.

The SAP receiving the returned TXOP based on the above TXOP return method may perform an individual frame exchange during a remaining TXOP duration, and/or perform an additional operation (e.g., (EHT) TXS, Co-TDMA) with another STA/AP.

### II-2. TXOP return procedure using MU-RTS TXS TF and CTS frames

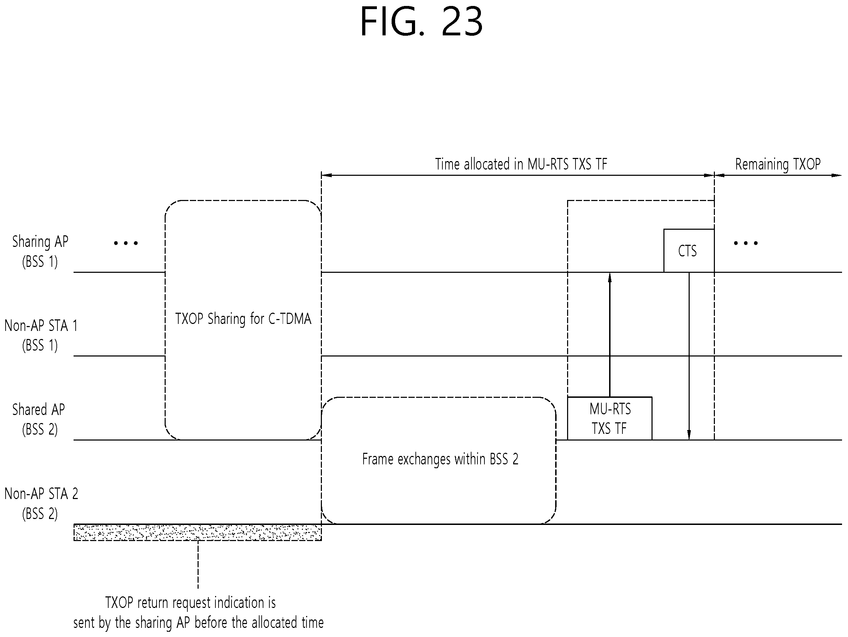

FIG. 23 shows an example of a TXOP return procedure using an MU-RTS TXS TF and a CTS frame according to an embodiment of the present disclosure.

Referring to FIG. 23, when the DAP completes FE, the DAP may perform a TXOP return by transmitting an MU-RTS TXS TF frame. For example, the DAP may perform a TXOP return procedure for Case 3) and/or Case 4) in "I. TXOP return method based on TXOP return indication for Co-TDMA". The DAP may transmit an MU-RTS TXS TF in which information of the SAP (e.g., an AID of the SAP and/or a new AID/AP ID defined for multi-AP coordination) is included in a User Info field. Alternatively, when an RA field of the MU-RTS TXS TF is set to an address of the SAP, a value of an AID field may be arbitrarily set. Alternatively, the DAP may transmit the MU-RTS TXS TF by including the information of the SAP in a Special User Info field. The MU-RTS TXS TF at this time may be defined as a new mode (e.g., mode 3), or a new type of trigger frame may be defined. The SAP receiving the frame transmitted from the DAP may be (pre-)configured to respond with a CTS frame (or, a CTS-to-Self frame) and start an individual frame exchange immediately after a SIFS or PIFS. In addition, STAs/APs receiving the MU-RTS TXS TF for a TXOP return may be (pre-)configured to reset a NAV for a TXOP holder. An RA field (or, TA field) of the CTS frame (or, CTS-to-Self frame) at this time may include address information of the SAP. If a corresponding CTS frame is not received from the SAP until a CTS timeout expires, the DAP may terminate (or, truncate) the allocated TXOP (or allocated time/allocation duration) by transmitting a CF-End frame.

Alternatively, a TXOP return procedure using an MU-RTS TXS TF and a CTS frame may be performed according to a TXOP return rule in Co-TDMA or a selection of the DAP without a separate TXOP return indication from the SAP.

The SAP receiving the returned TXOP based on the above TXOP return method may perform an individual frame exchange during a remaining TXOP duration, and/or perform an additional operation (e.g., (EHT) TXS, Co-TDMA) with another STA/AP.

### II-3. TXOP return procedure using (MU-)BAR (trigger) frame and BA frame

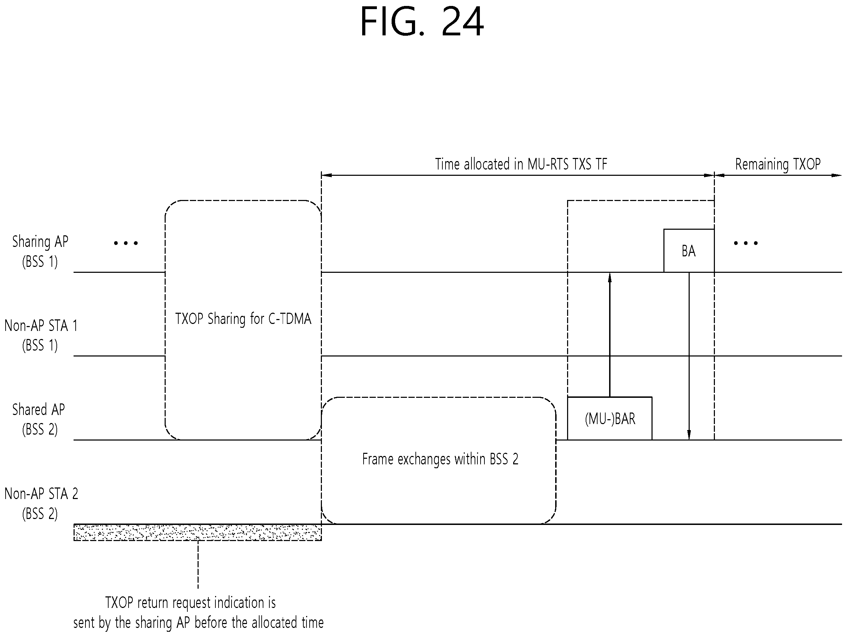

FIG. 24 shows an example of a TXOP return procedure using a BAR frame and a BA frame according to an embodiment of the present disclosure.

Referring to FIG. 24, when the DAP completes FE, the DAP may perform a TXOP return by transmitting a (MU-)block acknowledgment request (BAR) (trigger) frame. For example, the DAP may perform a TXOP return procedure for Case 3) and/or Case 4) in "I. TXOP return method based on TXOP return indication for Co-TDMA", and/or may perform a TXOP return according to a TXOP return rule in Co-TDMA or a selection of the DAP without a separate TXOP return indication from the SAP.

An RA field of the (MU-)BAR (trigger) frame transmitted by the DAP may include a BSSID, a BSS color, or a MAC address of the SAP. A new field (or, signaling bit) for indicating that it is used for the purpose of a TXOP return in Co-TDMA may be defined and/or added in the (MU-)BAR (trigger) frame at this time. The SAP receiving the (MU-)BAR (trigger) frame transmitted from the DAP may be (pre-)configured to respond with a BA frame and start an individual frame exchange immediately after a SIFS or PIFS. In addition, STAs receiving the (MU-)BAR (trigger) frame and the BA frame for a TXOP return may be (pre-)configured to reset a NAV for a target TXOP holder. If a corresponding BA frame is not received from the SAP, the DAP may retransmit the (MU-)BAR (trigger) frame, or may terminate the allocated TXOP (or allocated time/allocation duration) by transmitting a CF-End frame.

The SAP receiving the returned TXOP based on the above TXOP return method may perform an individual frame exchange during a remaining TXOP duration, and/or perform an additional operation (e.g., (EHT) TXS, Co-TDMA) with another STA/AP.

### II-4. TXOP return procedure using management frame including A-Control field

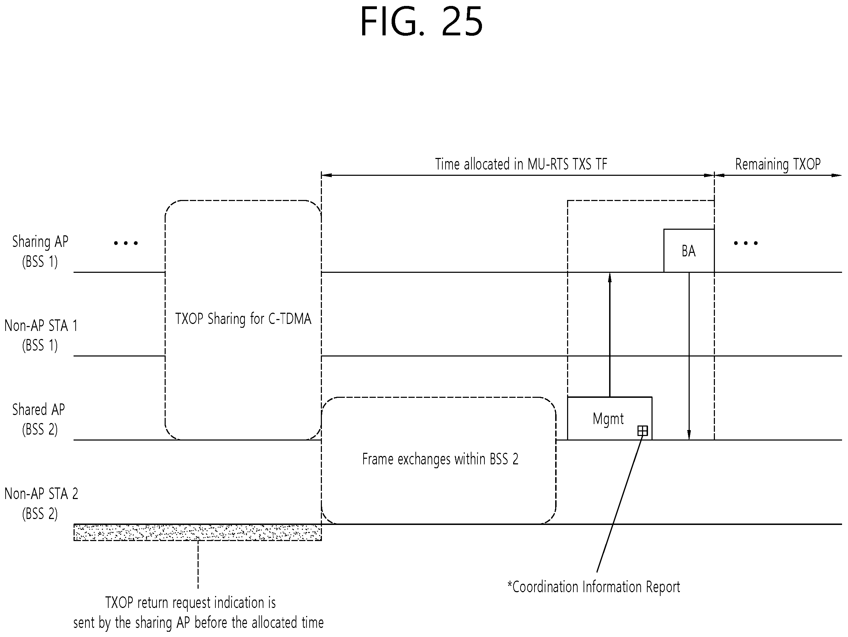

FIG. 25 shows an example of a TXOP return procedure using a management frame including an A-Control field according to an embodiment of the present disclosure.

Referring to FIG. 25, when the DAP completes a frame exchange, the DAP may perform a TXOP return procedure using a management frame including an A-Control field. For example, the DAP may perform a TXOP return procedure for Case 3) and/or Case 4) in "I. TXOP return method based on TXOP return indication for Co-TDMA", and/or may perform a TXOP return according to a TXOP return rule in Co-TDMA or a selection of the DAP without a separate TXOP return indication from the SAP.

A new type of control information field may be defined by utilizing a reserved control ID value (e.g., control ID value 7-14) of a control ID field in a control field of a management frame based on the A-Control field. For example, a new type of control information field for reporting a TXOP return (or, including information for reporting information related to a Co-TDMA operation) may be defined. In the present disclosure, the aforementioned new type of control information field (or, control field) may be referred to as a coordination information report (CIR) control field. The new type of CIR control field may include a field of elements which are based on one or a plurality of combinations, and may include a signaling bit/type field indicating that it is transmitted for the purpose of a TXOP return. The name of the corresponding field may be changed, and elements for a Co-TDMA operation may be added.

Additionally or alternatively, a CAS control field that is an HE variant of an HT control field may be utilized. For example, similar to a TXOP return procedure in a TXOP sharing of EHT, an AP (or STA) returning a TXOP may transmit a management frame including an HE variant HT control field including a CAS control field in which a reserve direction grant (RDG)/More PPDU field is set to 0 based on an indication that a TXOP return is allowed or required (e.g., TXOP return indication). As another example, an AP (or STA) returning a TXOP may transmit a management frame including an HE variant HT control field including a CAS control field in which a reserve direction grant (RDG)/More PPDU field is set to 0 regardless of an indication that a TXOP return is allowed or required (e.g., TXOP return indication). At this time, when it is not for the purpose of a TXOP return, an AP (or STA) may be (pre-)configured not to transmit a frame for signaling a TXOP return (e.g., a management frame including an HE variant HT control field including a CAS control field in which a reserve direction grant (RDG)/More PPDU field is set to 0) as described above.

In addition, STAs/APs receiving the management frame and/or the BA frame for a TXOP return may be (pre-)configured to reset a NAV for a target TXOP holder, and/or information for signaling a NAV reset may be added to the management frame and/or the BA frame for a TXOP return.

The SAP receiving the returned TXOP based on the above TXOP return method may perform an individual frame exchange during a remaining TXOP duration, and/or perform an additional operation (e.g., (EHT) TXS, Co-TDMA) with another STA/AP.

### II-5. TXOP return procedure using new management frame

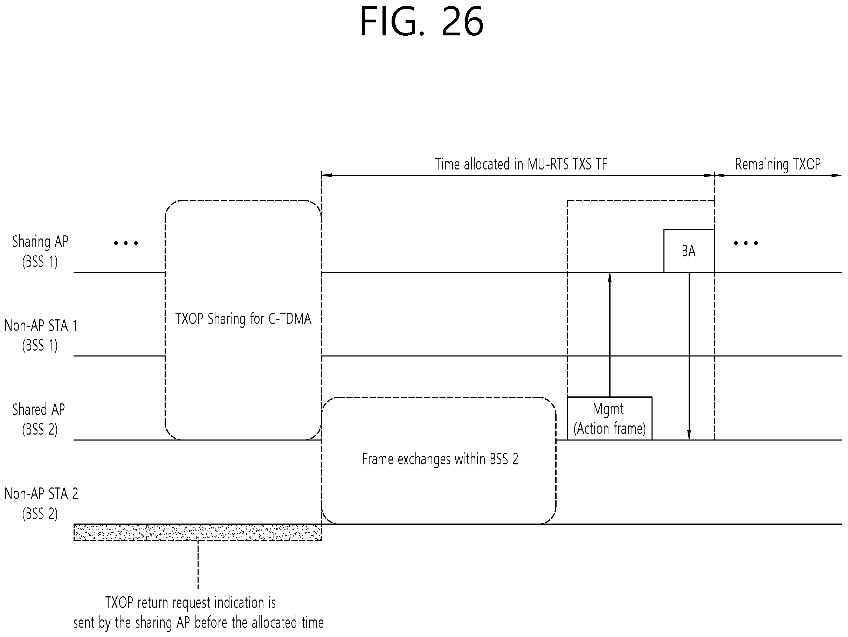

FIG. 26 shows an example of a TXOP return procedure using a management frame that is an action frame according to an embodiment of the present disclosure.

Referring to FIG. 26, when completing FE, the DAP may perform a TXOP return by transmitting a newly defined management frame. For example, the DAP may perform a TXOP return procedure for Case 3) and/or Case 4) in "I. TXOP return method based on TXOP return indication for Co-TDMA", and/or may perform a TXOP return according to a TXOP return rule in Co-TDMA or a selection of the DAP without a separate TXOP return indication from the SAP. The DAP may transmit a management frame that is a newly defined action frame for a TXOP return. Since a typical management frame has a large frame size, there is an advantage that an overhead can be reduced in terms of a frame size by using an action frame.

According to an embodiment, a new action frame (i.e., a type of management frame) may be defined. Similar to an EHT action frame and/or a protected EHT action frame that was newly defined in EHT (IEEE standard 802.11be), a UHR action frame and/or a protected UHR action frame may be defined in UHR (IEEE standard 802.11bn). That is, an action frame for returning a TXOP (or delivering information related to a Co-TDMA operation) in Co-TDMA may be defined as one among values of an action field of the UHR action frame and/or the protected UHR action frame.

Additionally or alternatively, a common action frame for multi-AP coordination may be newly defined by utilizing a reserved value (e.g., 54-59, 61-255) of a public action frame. For example, the corresponding Action frame may include an element/field including common information required for multi-AP coordination and/or an element/field including individually required information according to a multi-AP coordination scheme (e.g., Co-SR, Co-BF, Co-TDMA).

Additionally or alternatively, a new action frame for Co-TDMA may be defined by utilizing a reserved value (e.g., 54-59, 61-255) of a public action frame. For example, the corresponding action frame may include an element/field including overall information for Co-TDMA and/or an element/field for indicating/distinguishing a specific procedure (e.g., a TXOP sharing procedure/a time allocation procedure/a multi-AP selection procedure/a schedule announcement/a TXOP return).

For example, a public action frame for a TXOP return procedure may include a field/bit indicating that the corresponding public action frame is transmitted for a TXOP return (e.g., a TXOP return indication/notification).

In addition, a field indicating a reason/cause for which the corresponding STA/AP transmits the (public) action frame for a TXOP return in a TXOP return procedure may be defined, and may be added to the corresponding (public) action frame. For example, the reason/cause for transmitting the (public) action frame for a TXOP return may include at least one of having no buffered data/traffic, having used all allocated times, not requiring a time allocation, a reschedule, or returning an allocated time because a specific event (e.g., IDC, power saving, non-primary channel access (NPCA)) occurs within an allocated time.

An Action field of the corresponding (public) action frame may include information based on at least one of A, B, or C below (or a combination thereof). The names of A, B, and C may be changed, and other information besides A, B, and C may be additionally included in the Action field, but is not limited thereto. In addition, STAs/APs receiving the management frame and/or the (public) action frame for a TXOP return may be (pre-)configured to reset a NAV for a target TXOP holder, and/or information for signaling a NAV reset may be added to the management frame and/or the (public) action frame for a TXOP return.
A. Category: A value indicating a category field defined in an action field of an action frame among management frames. For example, Information A may be a value indicating an EHT action frame or a protected EHT action frame among a 1-byte category field. Specifically, Information A may be a value indicating a UHR Action frame or a protected UHR action frame that can be newly defined in UHR.
B. UHR Action (or) Protected UHR Action: An action to be performed by a corresponding frame may be indicated. For example, Information B may be a value indicating a link reconfiguration notify frame among a 1-byte action field in a Protected EHT Action frame. Specifically, a Co-TDMA operation frame may be newly defined among a 1-byte action field in a UHR Action frame or a Protected UHR Action frame that can be newly defined in UHR, and Information B may indicate a Co-TDMA operation frame. Alternatively, a TXOP return frame may be newly defined among a 1-byte action field in a UHR Action frame or a Protected UHR Action frame that can be newly defined in UHR, and Information B may indicate a TXOP return frame.
C. TXOP Return Request/Report: A value indicating a frame for a TXOP return. Information C may indicate that it is a frame for a TXOP by using 1 bit. For example, Bit 0 may indicate that it is not a frame for a TXOP return, and Bit 1 may indicate that it is a frame for a TXOP return.

The SAP receiving the returned TXOP based on the above TXOP return method may perform an individual frame exchange during a remaining TXOP duration, and/or perform an additional operation (e.g., (EHT) TXS, Co-TDMA) with another STA/AP.

### II-6. TXOP return procedure using BSRP TF and TB PPDU

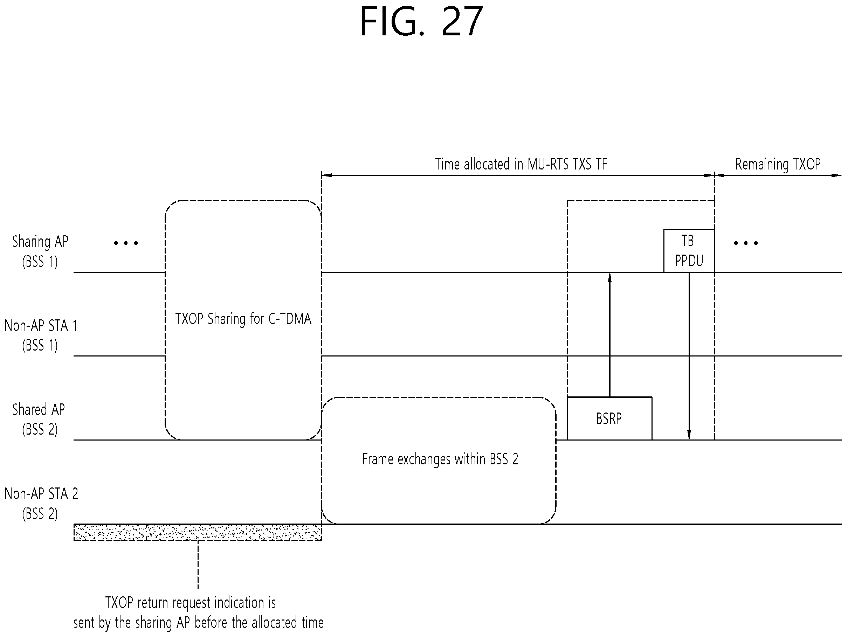

FIG. 27 shows an example of a TXOP return procedure using a BSRP TF and a TB PPDU (or non-TB PPDU) according to an embodiment of the present disclosure.

Referring to FIG. 27, when completing FE, the DAP may perform a TXOP return procedure by transmitting a buffer status report poll (BSRP) TF. For example, the DAP may perform a TXOP return procedure for Case 3) and/or Case 4) in "I. TXOP return method based on TXOP return indication for Co-TDMA". The DAP may transmit a BSRP TF in which information of the SAP (e.g., an AID of the SAP and/or a new AID defined for multi-AP coordination) is included in a User Info field. Alternatively, the DAP may transmit a BSRP TF by including information of the SAP in a Special User Info field. The SAP receiving the frame transmitted from the DAP may be (pre-)configured to respond with a TB PPDU (or non-TB PPDU) and start an individual frame exchange immediately after a SIFS or PIFS. In addition, STAs/APs receiving the BSRP TF for a TXOP return may be (pre-)configured to reset a NAV for a TXOP holder.

Alternatively, a TXOP return procedure using a BSRP TF and a TB PPDU (or non-TB PPDU) may be performed according to a TXOP return rule in Co-TDMA or a selection of the DAP without a separate TXOP return indication from the SAP.

The SAP receiving the returned TXOP based on the above TXOP return method may perform an individual frame exchange during a remaining TXOP duration, and/or perform an additional operation (e.g., (EHT) TXS, Co-TDMA) with another STA/AP.

### II-7. TXOP return procedure using multi-STA BA frame

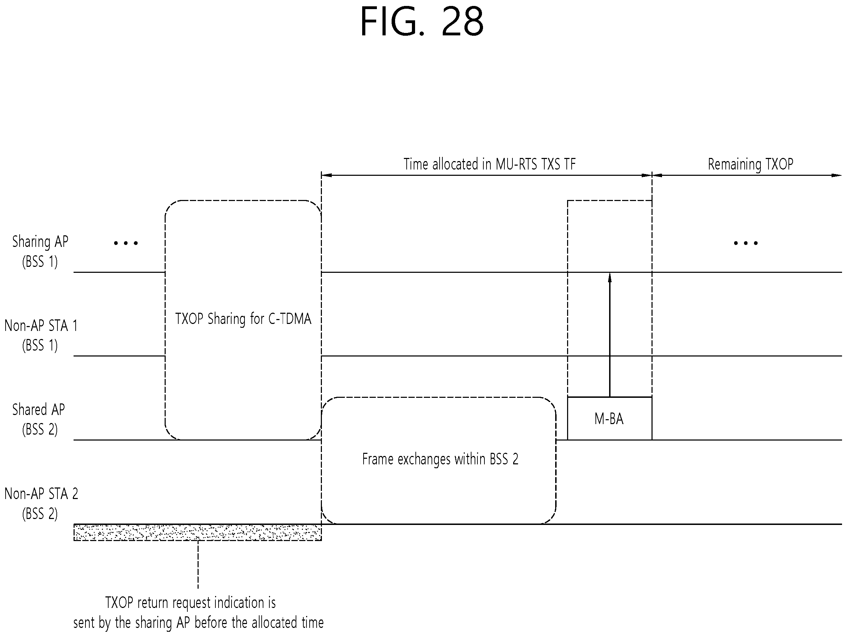

FIG. 28 shows an example of a TXOP return procedure using a multi-STA BA frame according to an embodiment of the present disclosure.

Referring to FIG. 28, when an allocated time (or allocation duration) remains when the DAP completes a frame exchange and/or when the DAP is instructed/requested to perform a separate TXOP return procedure from the SAP and/or when performing a TXOP return procedure is essential, the DAP may perform a TXOP return procedure by transmitting a multi-STA block Ack (BA) frame. For example, the DAP may perform a TXOP return procedure for one or more cases in "I. TXOP return method based on TXOP return indication for Co-TDMA". The DAP may transmit a multi-STA BA frame in which an RA field includes an address of the SAP to the SAP for a TXOP return, and the SAP receiving the multi-STA BA frame in which the RA field includes the address of the SAP may be (pre-)configured to receive the multi-STA BA frame and start an individual frame exchange immediately after a SIFS or PIFS for a smooth Co-TDMA operation. At this time, an AID11 field of the multi-STA BA frame may include 0, 2045, or an ID for AP identification (e.g., AP ID) (which can be newly defined for multi-AP coordination).

Alternatively, a TXOP return procedure using a multi-STA BA frame may be performed according to a TXOP return rule in Co-TDMA or a selection of the DAP without a separate TXOP return indication from the SAP.

The SAP receiving the returned TXOP based on the above TXOP return method may perform an individual frame exchange during a remaining TXOP duration, and/or perform an additional operation (e.g., (EHT) TXS, Co-TDMA) with another STA/AP.

### III. Hidden node problem upon TXOP return

When the DAP returns a TXOP, a hidden node problem may occur. The DAP may transmit a frame for a TXOP return based on various TXOP return procedures described in "II. TXOP return procedure for Co-TDMA". Except for Case 1) and Case 3) in "I. TXOP return method based on TXOP return indication for Co-TDMA", a TXOP return for Co-TDMA may be considered a situation of returning an allocated time early. In this case, some STAs associated with the SAP (that is, in a hidden node relationship with the DAP), for which a NAV is set by a STA associated with the DAP, may fail to reset a basic NAV set by the STA associated with the DAP and may fail to perform FE with the SAP during a remaining TXOP. In addition, overlapping BSS (OBSS) STAs (that is, STAs/APs not participating in multi-AP coordination and/or not sharing or shared a TXOP) for which a NAV is set by a STA associated with the DAP also fail to receive a frame for a TXOP return transmitted from the DAP and maintain the NAV during a remaining allocation duration, so that medium utilization may decrease.

To solve this, the DAP may not set a single duration for an entire FE process during an allocated time (or allocation duration), but set a separate short duration for an individual FE process.

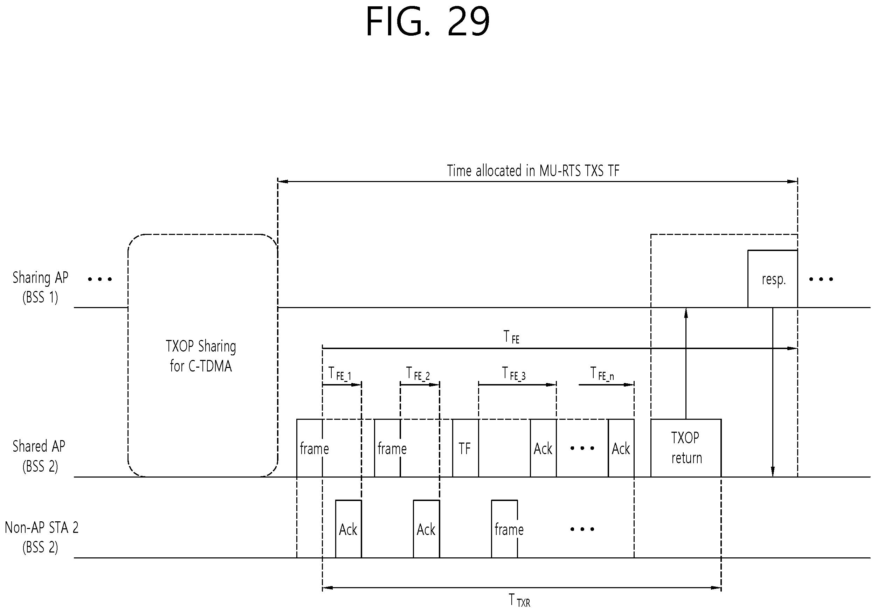

FIG. 29 shows an example of a case of setting a duration field for preventing a hidden node problem upon a TXOP return according to an embodiment of the present disclosure.

Referring to FIG. 29, to prevent a hidden node problem upon a TXOP return, the DAP may set a value of a duration field of a frame transmitted in an allocation duration to an appropriate value. For example, when performing FE with STAs within its BSS (i.e., BSS 2) during a time allocated from the SAP (e.g., allocation duration), the DAP may not set a duration field of a frame to an entire duration required to perform FE within the BSS (i.e., *T_{FE}*), but set it to a separate duration for performing individual FE (i.e., *T*_{*FE*₁}, *T*_{*FE*₂}, *T*_{*FE*₃} ..., *T_{FEₙ}*). In other words, as in FIG. 29, the DAP may perform FE by transmitting a frame in which a value of a duration field is set to a separate short duration (i.e., *T*_{*FE*₁}, *T*_{*FE*₂}, *T*_{*FE*₃} ..., *T_{FEₙ}*) for FE with STAs within BSS 2. Therefore, since the DAP performs FE during each individual duration, a NAV problem caused by a remaining allocation duration can be prevented. The DAP may complete individual FEs and then transmit a frame for a TXOP return. Alternatively, the DAP may set a value of a duration field of a frame transmitted in an allocated time (or allocation duration) to a duration from a first frame transmitted within the allocated time (or allocation duration) to transmitting a TXOP return frame.

### IV. CCA method for remaining TXOP after TXOP return

According to an embodiment of the present disclosure, an SAP (or a TXOP holder/owner) may perform a CCA (e.g., energy detection (ED), carrier sensing (CS)) in order to fully/successfully use a remaining TXOP duration after a TXOP return. Each primary channel may exist within each BSS operating channel width of the SAP and the DAP, and the primary channels may be different from each other. Additionally or alternatively, the primary channels of the SAP and the DAP may be the same as each other. In addition, the BSS operating channel widths of the SAP and the DAP may be different from each other. For example, a bandwidth (BW) of the SAP may be 160 MHz, and a BW of the DAP may be 80 MHz. Since the SAP does not perform FE during a time allocated to the DAP by the SAP, some STAs that changed from a doze state to an awake state may occupy a channel corresponding to the BSS operating channel width of the SAP due to a blindness issue, and this may cause a problem that the SAP cannot obtain a remaining TXOP. Therefore, the SAP receiving a frame for a TXOP return (e.g., a CF-End frame, an MU-RTS TXS TF, a (MU-)BAR (trigger) frame, a management frame, a BSRP TF) from the DAP needs to perform a CCA before performing a frame exchange in a remaining TXOP duration.

In various embodiments, the CCA may be based on Mode 1 (ED only), Mode 2 (CS only), and Mode 3 (ED and/or CS), and is not limited thereto.

### IV-1. Without backoff

The SAP may perform a CCA on its BSS operating channel width immediately after receiving a frame for a TXOP return (e.g., a CF-End frame, an MU-RTS TXS TF, a (MU-)BAR (trigger) frame, a management frame, a BSRP TF) transmitted from the DAP. Alternatively, the SAP may perform a CCA only on a channel that does not overlap with the BSS operating channel width of the DAP.

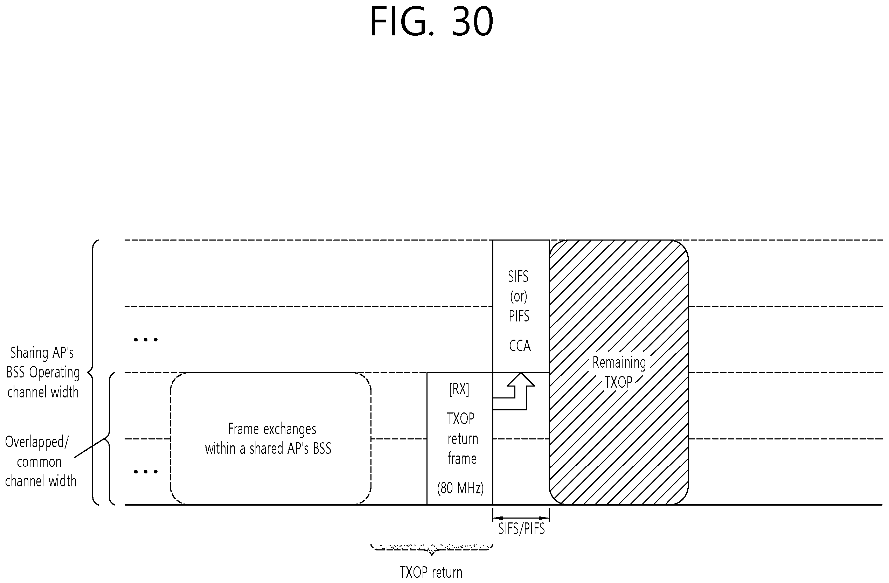

FIG. 30 shows a first example of a CCA procedure in which a backoff is not performed after a TXOP return according to an embodiment of the present disclosure.

Referring to FIG. 30, the SAP receiving a TXOP return frame (e.g., a CF-End frame, an MU-RTS TXS TF, a (MU-)BAR (trigger) frame, a management frame, a BSRP TF) transmitted for a TXOP return may utilize a remaining TXOP duration by performing a CCA (e.g., ED/CS) without a separate backoff. In FIG. 30, it is assumed that the SAP has a BSS operating channel width of 160 MHz, but a channel width overlapping with the DAP (i.e., overlapped/common channel width) is 80 MHz.

Option 1) The SAP receiving the TXOP return frame transmitted for a TXOP return may perform a CCA on a non-overlapped channel during a SIFS (or PIFS). That is, a channel on which a CCA is performed is limited to a channel where the SAP and the DAP do not overlap. When the non-overlapped channel is determined to be an idle state through this, the SAP may perform individual FE in a bandwidth including the corresponding channel, and/or perform an additional operation (e.g., (EHT) TXS, Co-TDMA) with another STA/AP. That is, the SAP may be (pre-)configured to start individual FE immediately in a bandwidth including a channel in an idle state after a SIFS/PIFS upon receiving a frame for a TXOP return.

Option 2) The SAP may perform a CCA on its entire BSS operating channel width as well as the channel not overlapping with the DAP, and when the channel is in an idle state, may perform FE (in a remaining TXOP duration). The SAP may be (pre-)configured to start individual FE immediately in a bandwidth including a channel in an idle state after a SIFS/PIFS upon receiving a frame for a TXOP return.

Option 3) The SAP may perform a CCA for a PIFS duration before receiving a TXOP return frame on the entire BSS operating channel width of the SAP and the DAP, and may perform FE when the channel is also in an idle state in a duration leading up to starting a remaining TXOP.

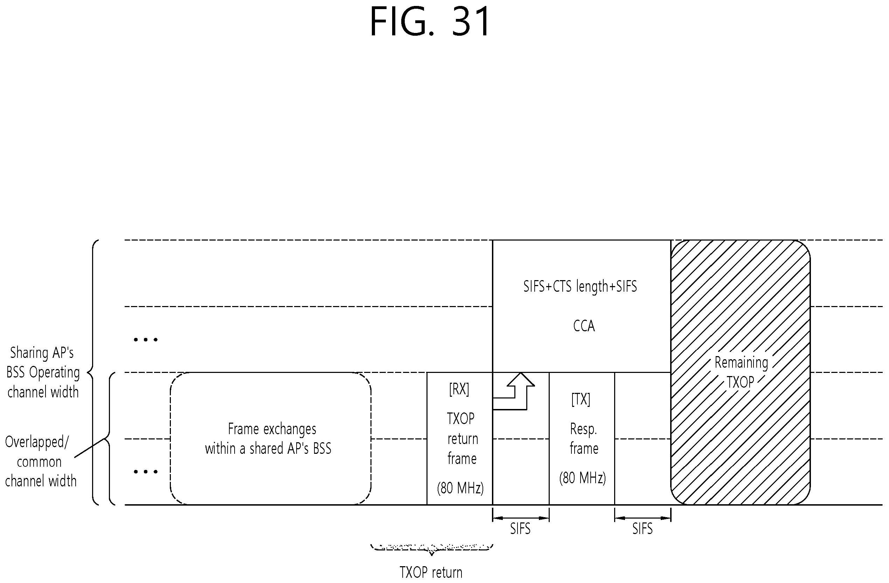

FIG. 31 shows a second example of a CCA procedure in which a backoff is not performed after a TXOP return according to an embodiment of the present disclosure.

Referring to FIG. 31, the SAP receiving a TXOP return frame (e.g., a CF-End frame, an MU-RTS TXS TF, a (MU-)BAR (trigger) frame, a management frame, a BSRP TF) transmitted for a TXOP return may utilize a remaining TXOP duration by performing a CCA (e.g., ED/CS) without a separate backoff. In FIG. 31, it is assumed that the SAP has a BSS operating channel width of 160 MHz, but a channel width overlapping with the DAP (i.e., overlapped/common channel width) is 80 MHz.

Option 1) The SAP receiving the TXOP return frame transmitted for a TXOP return may perform a CCA on a non-overlapped channel during a duration of "SIFS + CTS length + SIFS". That is, a channel on which a CCA is performed is limited to a channel where the SAP and the DAP do not overlap. When the non-overlapped channel is determined to be an idle state through this, the SAP may perform individual FE in a bandwidth including the corresponding channel, and/or perform an additional operation (e.g., (EHT) TXS, Co-TDMA) with another STA/AP. That is, the SAP may be (pre-)configured to receive a frame for a TXOP return, respond with a corresponding response frame (e.g., a CTS frame), and immediately perform individual FE in a bandwidth including an idle channel after a SIFS from the time of responding.

Option 2) The SAP may perform a CCA on its entire BSS operating channel width as well as the channel not overlapping with the DAP, and when the channel is in an idle state, may perform FE (in a remaining TXOP duration). The SAP may be (pre-)configured to receive a frame for a TXOP return, respond with a corresponding response frame (e.g., a CTS frame), and immediately perform individual FE in a bandwidth including an idle channel after a SIFS from the time of responding.

Option 3) The SAP may perform a CCA for a PIFS duration before receiving a TXOP return frame on the entire BSS operating channel width of the SAP and the DAP, and may perform FE when the channel is also in an idle state in a duration leading up to starting a remaining TXOP.

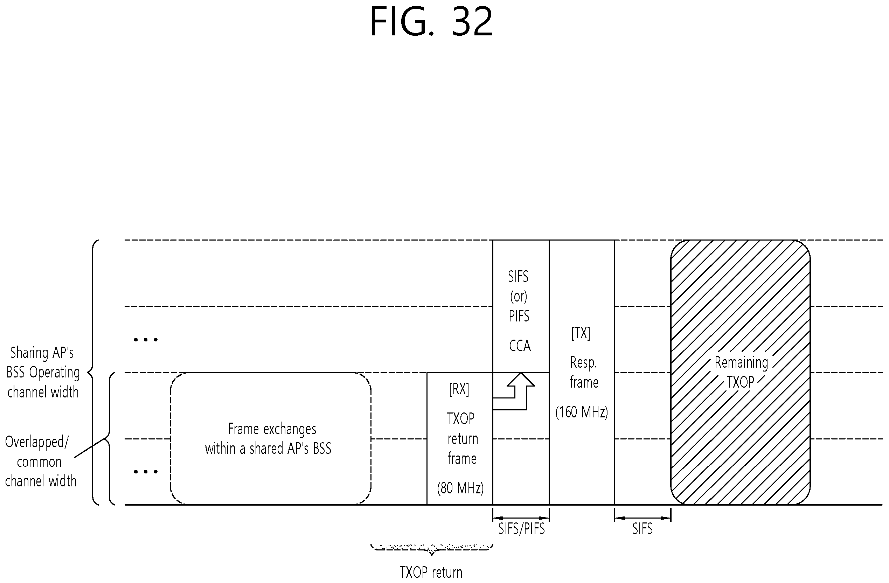

FIG. 32 shows a third example of a CCA procedure in which a backoff is not performed after a TXOP return according to an embodiment of the present disclosure.

Referring to FIG. 32, the SAP receiving a TXOP return frame (e.g., a CF-End frame, an MU-RTS TXS TF, a (MU-)BAR (trigger) frame, a management frame, a BSRP TF) transmitted for a TXOP return may utilize a remaining TXOP duration by performing a CCA (e.g., ED/CS) without a separate backoff. In FIG. 32, it is assumed that the SAP has a BSS operating channel width of 160 MHz, but a channel width overlapping with the DAP (i.e., overlapped/common channel width) is 80 MHz.

Option 1) The SAP receiving the TXOP return frame transmitted for a TXOP return may perform a CCA on a non-overlapped channel during a SIFS (or PIFS). That is, a channel on which a CCA is performed is limited to a channel where the SAP and the DAP do not overlap. When the non-overlapped channel is determined to be an idle state through this, the SAP may transmit a response frame in a bandwidth including the corresponding channel and perform individual FE, and/or perform an additional operation (e.g., (EHT) TXS, Co-TDMA) with another STA/AP.

At this time, a TXVECTOR parameter CH_BANDWIDTH (e.g., may indicate 160 MHz) of a PPDU including a response frame transmitted by the SAP may have a value larger than a TXVECTOR parameter CH_BANDWIDTH (e.g., may indicate 80 MHz) of a PPDU including a frame for a TXOP return transmitted by the DAP. Therefore, for FE after a TXOP return in Co-TDMA, Rule 1) as below may be defined:
Rule 1) In a C-TDMA operation, the SAP (i.e., a TXOP holder/owner) may transmit a response frame (e.g., a CTS/CTS-to-self frame) to a TXOP return frame through a PPDU in which a TXVECTOR parameter CH_BANDWIDTH value is set equal to or larger than a value of a TXVECTOR parameter CH_BANDWIDTH of a non-initial PPDU including the TXOP return frame transmitted by the DAP for a TXOP return (within an allocated time).

Therefore, the SAP following Rule 1) above may receive a frame for a TXOP return (i.e., a TXOP return frame) and perform a CCA during a SIFS/PIFS, and when a channel is determined to be in an idle state, may transmit a corresponding response frame in a bandwidth including the corresponding channel. The SAP may transmit a response frame and perform individual FE (in a remaining TXOP duration) after a SIFS.

Option 2) The SAP may perform a CCA on its entire BSS operating channel width as well as the channel not overlapping with the DAP, and when the channel is in an idle state, may perform FE (in a remaining TXOP duration). That is, after performing a CCA during a SIFS/PIFS on a bandwidth corresponding to the entire BSS operating channel width of the SAP, the SAP may transmit a response frame in the corresponding bandwidth and perform FE (in a remaining TXOP duration). In the case of Option 2) as well, the SAP may follow Rule 1) as in Option 1).

Option 3) The SAP may perform a CCA for a PIFS duration before receiving a TXOP return frame on the entire BSS operating channel width of the SAP and the DAP, and may perform FE when the channel is also in an idle state in a duration leading up to starting a remaining TXOP. In the case of Option 3) as well, the SAP may follow Rule 1) as in Option 1).

### IV-2. With backoff

The SAP may i) perform a backoff on an overlapped/common channel width of the SAP and the DAP, and ii) perform a CCA during a SIFS/PIFS on a remaining channel immediately after receiving a frame for a TXOP return (e.g., a CF-End frame, an MU-RTS TXS TF, a (MU-)BAR (trigger) frame, a management frame, a BSRP TF) transmitted from the DAP.

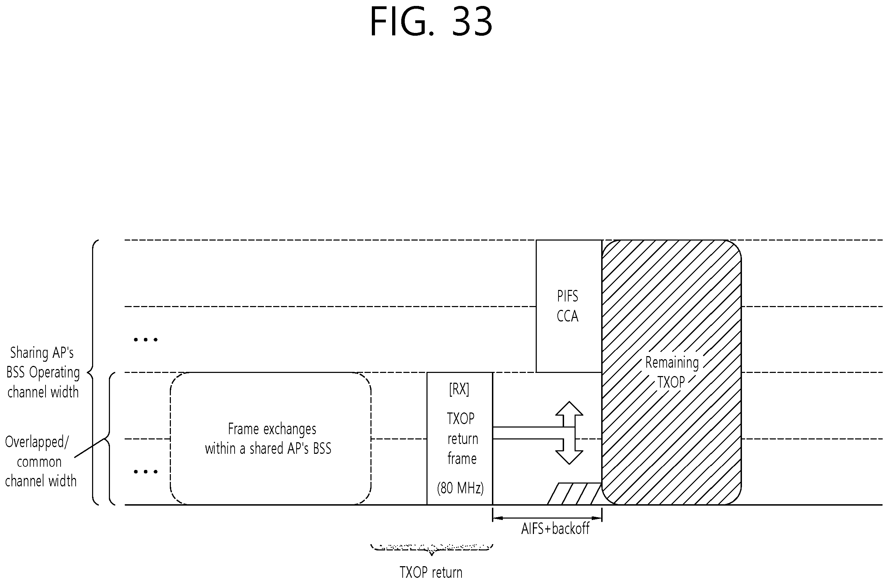

FIG. 33 shows a first example of a CCA procedure in which a backoff is performed after a TXOP return according to an embodiment of the present disclosure.

Referring to FIG. 33, the SAP receiving a TXOP return frame for a TXOP return may utilize a remaining TXOP duration by performing a backoff and a CCA (e.g., ED/CS). In FIG. 33, it is assumed that the SAP has a BSS operating channel width of 160 MHz, but a channel width overlapping with the DAP (i.e., overlapped/common channel width) is 80 MHz.

The SAP receiving the TXOP return frame transmitted by the DAP for a TXOP return may i) receive the TXOP return frame and perform a backoff after an AIFS on an overlapped/common channel of the SAP and the DAP, and ii) perform a CCA during a SIFS/PIFS on a non-overlapped channel. The SAP may perform individual FE through a bandwidth including a channel determined to be in an idle state based on a backoff/CCA, and/or perform an additional operation (e.g., (EHT) TXS, Co-TDMA) with another STA/AP.

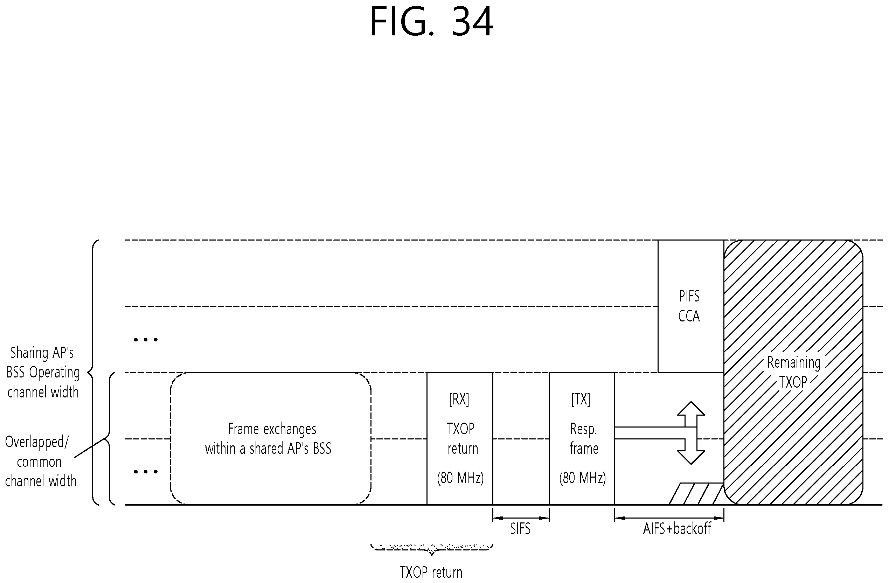

FIG. 34 shows a second example of a CCA procedure in which a backoff is performed after a TXOP return according to an embodiment of the present disclosure.

Referring to FIG. 34, the SAP receiving a TXOP return frame for a TXOP return may transmit a response frame to the TXOP return frame, and utilize a remaining TXOP duration by performing a backoff and a CCA (e.g., ED/CS). In FIG. 34, it is assumed that the SAP has a BSS operating channel width of 160 MHz, but a channel width overlapping with the DAP (i.e., overlapped/common channel width) is 80 MHz.

The SAP receiving the TXOP return frame transmitted by the DAP for a TXOP return may transmit a response frame to the TXOP return frame, and i) receive the TXOP return frame and perform a backoff after an AIFS on an overlapped/common channel of the SAP and the DAP, and ii) perform a CCA during a SIFS/PIFS on a non-overlapped channel. The SAP may perform individual FE through a bandwidth including a channel determined to be in an idle state based on a backoff/CCA, and/or perform an additional operation (e.g., (EHT) TXS, Co-TDMA) with another STA/AP.

### V. PPDU bandwidth configuration after TXOP return

When an SAP (i.e., a TXOP holder/owner) transmits a PPDU for a frame exchange in a remaining TXOP duration after a TXOP return, how to configure a bandwidth of the corresponding PPDU needs to be addressed. For example, in a TXOP sharing in EHT, a bandwidth rule for a PPDU transmitted by a non-AP STA within a time allocated from an AP exists, but a bandwidth rule for a PPDU transmitted from an AP after a TXOP return is not defined. Therefore, a PPDU bandwidth rule for a situation of sharing a TXOP between different BSSs that may have different BSS operating channel widths needs to be defined.

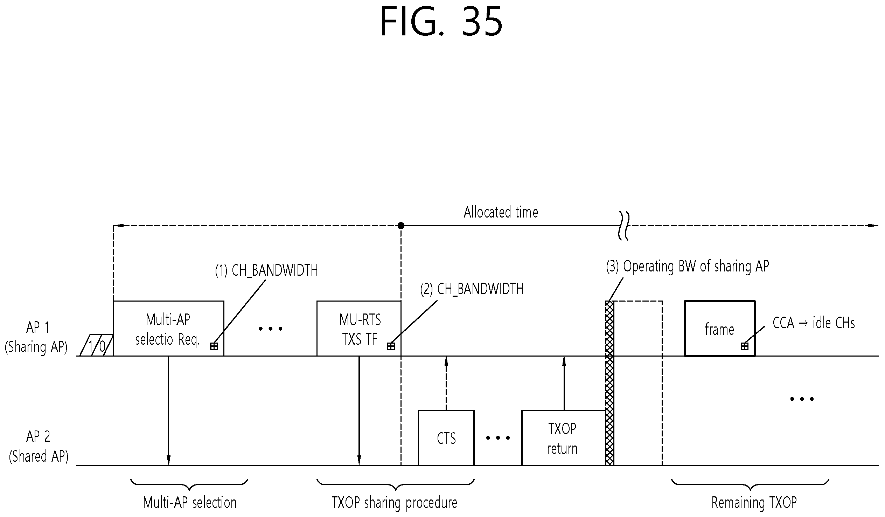

FIG. 35 shows an example regarding a configuration of a PPDU bandwidth after a TXOP return in Co-TDMA according to an embodiment of the present disclosure.

Referring to FIG. 35, in order to determine/configure a bandwidth of a PPDU including a frame transmitted by the SAP after a TXOP return, the SAP may determine a BW for performing a CCA after a TXOP return.

For example, the SAP may determine a bandwidth value of a CCA upon a TXOP return based on a CH_BANDWIDTH value of a PPDU including the initial frame (e.g., initial control frame (ICF)) which the SAP transmits after obtaining a TXOP. The SAP may perform a CCA on a bandwidth equal to or smaller than a CH_BANDWIDTH value of a PPDU including a multi-AP selection request frame, and transmit subsequent frames during a remaining TXOP duration by using one or more channels in an idle state as a result of a CCA.

Alternatively, the SAP may determine a bandwidth value of a CCA upon a TXOP return based on a CH_BANDWIDTH value of a PPDU including an MU-RTS TXS TF transmitted to share a TXOP with the DAP. The SAP may perform a CCA on a bandwidth equal to or smaller than a CH_BANDWIDTH value of a preceding PPDU, and transmit subsequent frames during a remaining TXOP duration by using one or more channels in an idle state as a result of a CCA.

Alternatively, the SAP may perform a CCA based on a maximum operating channel width of the SAP upon a TXOP return as in "IV. CCA method for remaining TXOP after TXOP return", and determine a bandwidth value of a PPDU. That is, a CCA may be performed on a bandwidth corresponding to a maximum bandwidth value within a BSS operating channel width of the SAP at a time of returning a TXOP, and subsequent frames may be transmitted during a remaining TXOP duration by using one or more channels in an idle state as a result of a CCA.

In the present disclosure, a method and apparatus for a TXOP return between APs in a Co-TDMA operation are provided. According to embodiments of the present disclosure, the SAP may transmit indicator information indicating whether a return for the shared TXOP is required to the DAP, and through this, an unnecessary TXOP return procedure can be prevented from being performed. In other words, through the TXOP return method of the present disclosure, the DAP may identify whether a TXOP return is required based on a TXOP return request of the SAP, and through this, a utilization rate of a medium can be increased and a TXOP return procedure to the SAP can be successfully performed. Alternatively, a TXOP return procedure may be performed according to a determination and/or implementation of the DAP without a separate indication from the SAP.

In addition, in the present disclosure, a method and apparatus for configuring a duration field to solve a hidden node problem that may occur upon a TXOP return are provided.

In addition, in the present disclosure, a CCA method and apparatus for the SAP to successfully use a remaining TXOP duration after a TXOP return are provided. According to the CCA method provided in the present disclosure, a collision that may occur during a frame exchange after a TXOP return can be prevented, and it can be guaranteed that the SAP can fully use its own BSS operating channel width.

The technical features of the present disclosure described above can be applied to various devices and methods. For example, the technical features of the present disclosure described above can be performed/supported by the devices of FIG. 1 and/or FIG. 5. For example, the technical features of the present disclosure described above can be applied only to a part of FIG. 1 and/or FIG. 5. For example, the technical features of the present disclosure described above can be implemented based on the processing chips 114, 124 of FIG. 1, or implemented based on the processors 111, 121 and the memories 112, 122 of FIG. 1, or implemented based on the processor 510 and the memory 520 of FIG. 5.

For example, the processor 121 and/or processing chip 124 of FIG. 1 may be configured to execute instructions stored in the memory 122 to implement the method performed by the first AP in the present disclosure. The method comprises: performing a negotiation procedure for multi-AP coordination with a second AP; receiving, from the second AP, a transmission opportunity (TXOP) sharing frame comprising information for an allocation duration within a TXOP duration; performing a frame exchange with a station (STA) associated with the first AP in the allocation duration; and upon completion of the frame exchange, transmitting, to the second AP, a TXOP return frame comprising a TXOP return notification.

For example, the processor 111, the processing chip 114 of FIG. 1 and/or the processor 510 of FIG. 5 may be configured to execute instructions stored in the memory 112, 520 to implement the method performed by the second AP in the present disclosure. The method comprises: performing a negotiation procedure for multi-AP coordination with a first AP; transmitting, to the first AP, a TXOP sharing frame comprising information for an allocation duration within a transmission opportunity (TXOP) duration; upon completion of a frame exchange by the first AP in the allocation duration, receiving, from the first AP, a TXOP return frame comprising a TXOP return notification; and performing a frame exchange with a station (STA) associated with the second AP in a remaining TXOP duration after receiving the TXOP return notification within the TXOP duration.

The technical features of the present disclosure can be implemented based on a computer readable medium (CRM) (e.g., non-transitory CRM). For example, the CRM in the present disclosure may comprise at least one CRM having stored thereon a program code implementing instructions executed by at least one processor.

For example, the CRM may be the memory 122 of FIG. 1 and/or a separate external memory/storage medium/disk. The CRM may store instructions that implement the method performed by the first AP in the present disclosure based on being executed by a processor (e.g., the processor 121 and/or the processing chip 124 of FIG. 1). The method comprises: performing a negotiation procedure for multi-AP coordination with a second AP; receiving, from the second AP, a transmission opportunity (TXOP) sharing frame comprising information for an allocation duration within a TXOP duration; performing a frame exchange with a station (STA) associated with the first AP in the allocation duration; and upon completion of the frame exchange, transmitting, to the second AP, a TXOP return frame comprising a TXOP return notification.

For example, the CRM may be the memory 112 of FIG. 1, the memory 520 of FIG. 5, and/or a separate external memory/storage medium/disk. The CRM may store instructions that implement the method performed by the second AP in the present disclosure based on being executed by a processor (e.g., the processor 111, the processing chip 114 of FIG. 1, and/or the processor 510 of FIG. 5). The method comprises: performing a negotiation procedure for multi-AP coordination with a first AP; transmitting, to the first AP, a TXOP sharing frame comprising information for an allocation duration within a transmission opportunity (TXOP) duration; upon completion of a frame exchange by the first AP in the allocation duration, receiving, from the first AP, a TXOP return frame comprising a TXOP return notification; and performing a frame exchange with a station (STA) associated with the second AP in a remaining TXOP duration after receiving the TXOP return notification within the TXOP duration.

The foregoing technical features of this disclosure are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The present disclosure may have various advantageous effects.

For example, according to embodiments of the present disclosure, the SAP may transmit, to the DAP, indicator information indicating whether a return for the shared TXOP is required, and through this, an unnecessary TXOP return procedure can be prevented from being performed. In other words, through the TXOP return method of the present disclosure, the DAP may identify whether a TXOP return is required based on a TXOP return request of the SAP, and through this, a utilization rate of a medium can be increased and a TXOP return procedure to the SAP can be successfully performed. Alternatively, a TXOP return procedure may be performed according to a determination and/or implementation of the DAP without a separate indication from the SAP.

In addition, in the present disclosure, by setting a duration field of a frame transmitted in the TXOP allocation duration to a value corresponding to an individual frame exchange time, a hidden node problem that may occur upon a TXOP return can be solved.

In addition, in the present disclosure, a CCA method and apparatus for the SAP to successfully use a remaining TXOP duration after a TXOP return are provided. According to the CCA method provided in the present disclosure, a collision that may occur during a frame exchange after a TXOP return can be prevented, and it can be guaranteed that the SAP can fully use its own BSS operating channel width.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus, and technical features in method claim(s) and apparatus claim(s) can be combined to be implemented or performed in a method.

## Claims

1. A method comprising:
performing, by a first access point (AP), a negotiation procedure for multi-AP coordination with a second AP;
receiving, by the first AP from the second AP, a transmission opportunity (TXOP) sharing frame comprising information for an allocation duration within a TXOP duration;
performing, by the first AP, a frame exchange with a station (STA) associated with the first AP in the allocation duration; and
upon completion of the frame exchange, transmitting, by the first AP to the second AP, a TXOP return frame comprising a TXOP return notification.

2. The method of claim 1, further comprising receiving, by the first AP from the second AP, a TXOP return indication comprising at least one bit or field indicating that a TXOP return is required in the multi-AP coordination,
wherein the TXOP return frame is transmitted based on the TXOP return indication.

3. The method of claim 2, wherein the TXOP return indication is received through at least one of a beacon frame received from the second AP, a frame received from the second AP in the negotiation procedure, or the TXOP sharing frame.

4. The method of claim 1, wherein the TXOP return frame is transmitted without the first AP receiving a TXOP return indication from the second AP.

5. The method of claim 1, wherein the frame exchange is completed upon an expiry of the allocation duration, and
wherein the TXOP return frame is transmitted upon an expiry of the allocation duration.

6. The method of claim 1, wherein the frame exchange is completed before the allocation duration expires,
wherein the TXOP return frame is transmitted upon completion of the frame exchange before the allocation duration expires, and
wherein the method further comprises, when the TXOP return frame is transmitted, releasing or truncating, by the first AP, a channel occupied by the first AP for the frame exchange for the allocation duration.

7. The method of claim 1, wherein the TXOP return notification comprises at least one bit or field notifying a TXOP return in the multi-AP coordination.

8. The method of claim 1, wherein the TXOP return frame is a contention-free (CF) end frame, and
wherein the TXOP return notification is related to a receiver address (RA) field of the CF end frame set to an address of the second AP.

9. The method of claim 1, wherein the TXOP return frame is a multi-user request to send (MU-RTS) trigger frame,
wherein the TXOP return notification is related to: i) a user information field of the MU-RTS trigger frame comprising information of the second AP; ii) a receiver address (RA) field of the MU-RTS trigger frame set to an address of the second AP and an association identifier (AID) field of the MU-RTS frame set to an arbitrary value; or iii) a special user information field of the MU-RTS trigger frame comprising information of the second AP, and
wherein the information of the second AP comprises at least one of an AID of the second AP or an AP ID of the second AP allocated for the multi-AP coordination.

10. The method of claim 1, wherein the TXOP return frame is a block acknowledgment request (BAR) frame, and
wherein the TXOP return notification is related to at least one of: a receiver address (RA) field of the BAR frame set to a basic service set identifier (BSSID), a BSS color, or an address of the second AP; an association identifier (AID) of the second AP; or an AP ID of the second AP allocated for multi-AP coordination.

11. The method of claim 1, wherein the TXOP return frame is a management frame comprising an aggregated (A)-Control field, and
wherein the TXOP return notification is related to a coordination information report (CIR) control field, or a command and status (CAS) control field in which a reserve direction grant (RDG)/More PPDU field is set to 0.

12. The method of claim 1, wherein the TXOP return frame comprises an action frame related to a management frame, and
wherein the TXOP return notification is included in an action field of the action frame.

13. The method of claim 1, wherein the TXOP return frame is a buffer status report poll (BSRP) trigger frame,
wherein the TXOP return notification is related to: i) a user information field of the BSRP trigger frame comprising information of the second AP; ii) a receiver address (RA) field of the BSRP trigger frame set to an address of the second AP and an association identifier (AID) field of the MU-RTS frame set to an arbitrary value; or iii) a special user information field of the BSRP trigger frame comprising information of the second AP, and
wherein the information of the second AP comprises at least one of an AID of the second AP or an AP ID of the second AP allocated for the multi-AP coordination.

14. The method of claim 1, wherein the TXOP return frame is a multi-STA block acknowledgment (BA) frame, and
wherein the TXOP return notification is related to at least one of: a receiver address (RA) field of the multi-STA BA frame set to an address of the second AP; an association identifier (AID) of the second AP; or an AP ID of the second AP allocated for multi-AP coordination.

15. A first access point (AP) comprising:
a transceiver;
a memory; and
at least one processor operatively coupled to the transceiver and the memory,
wherein the memory stores instructions that, based on being executed by the at least one processor, perform operations comprising:
performing a negotiation procedure for multi-AP coordination with a second AP;
receiving, from the second AP, a transmission opportunity (TXOP) sharing frame comprising information for an allocation duration within a TXOP duration;
performing a frame exchange with a station (STA) associated with the first AP in the allocation duration; and
upon completion of the frame exchange, transmitting, to the second AP, a TXOP return frame comprising a TXOP return notification.

16. An apparatus comprising:
at least one processor; and
at least one memory operatively coupled to the at least one processor,
wherein the at least one memory stores instructions that, based on being executed by the at least one processor, perform operations comprising:
performing a negotiation procedure for multi-AP coordination with a second AP;
receiving, from the second AP, a transmission opportunity (TXOP) sharing frame comprising information for an allocation duration within a TXOP duration;
performing a frame exchange with a station (STA) associated with the first AP in the allocation duration; and
upon completion of the frame exchange, transmitting, to the second AP, a TXOP return frame comprising a TXOP return notification.

17. A non-transitory computer readable medium (CRM) having stored thereon a program code implementing instructions that, based on being executed by at least one processor, perform operations comprising:
performing a negotiation procedure for multi-AP coordination with a second AP;
receiving, from the second AP, a transmission opportunity (TXOP) sharing frame comprising information for an allocation duration within a TXOP duration;
performing a frame exchange with a station (STA) associated with the first AP in the allocation duration; and
upon completion of the frame exchange, transmitting, to the second AP, a TXOP return frame comprising a TXOP return notification.

18. A method comprising:
performing, by a second access point (AP), a negotiation procedure for multi-AP coordination with a first AP;
transmitting, by the second AP to the first AP, a TXOP sharing frame comprising information for an allocation duration within a transmission opportunity (TXOP) duration;
upon completion of a frame exchange by the first AP in the allocation duration, receiving, by the second AP from the first AP, a TXOP return frame comprising a TXOP return notification; and
performing, by the second AP, a frame exchange with a station (STA) associated with the second AP in a remaining TXOP duration after receiving the TXOP return notification within the TXOP duration.

19. A second access point (AP) comprising:
a transceiver;
a memory; and
at least one processor operatively coupled to the transceiver and the memory,
wherein the memory stores instructions that, based on being executed by the at least one processor, perform operations comprising:
performing a negotiation procedure for multi-AP coordination with a first AP;
transmitting, to the first AP, a TXOP sharing frame comprising information for an allocation duration within a transmission opportunity (TXOP) duration;
upon completion of a frame exchange by the first AP in the allocation duration, receiving, from the first AP, a TXOP return frame comprising a TXOP return notification; and
performing a frame exchange with a station (STA) associated with the second AP in a remaining TXOP duration after receiving the TXOP return notification within the TXOP duration.

20. The second AP of claim 19, wherein the remaining TXOP duration comprises: i) a time duration after the allocation duration, based on the frame exchange being completed upon expiration of the allocation duration, and ii) a time duration after the allocation duration and a time duration after receiving the TXOP return frame within the allocation duration, based on the frame exchange being completed before the allocation duration expires.
